Europäisches Patentamt

European Patent Office

Office européen des brevets

(11) Publication number: **0 061 759**
**B1**

(12) **EUROPEAN PATENT SPECIFICATION**

(45) Date of publication of patent specification: **18.09.85**

(21) Application number: **82102637.4**

(22) Date of filing: **29.03.82**

(51) Int. Cl.⁴: **F 15 B 9/04, F 15 B 21/08,**
**F 04 B 49/06, G 05 D 3/14**

(54) **Control system for hydraulic circuit means including a variable displacement pump and actuator means.**

(30) Priority: **30.03.81 JP 45386/81**
**26.03.82 JP 47083/82**
**26.03.82 JP 48336/82**

(43) Date of publication of application:
**06.10.82 Bulletin 82/40**

(45) Publication of the grant of the patent:
**18.09.85 Bulletin 85/38**

(84) Designated Contracting States:
**DE FR**

(56) References cited:
**EP-A-0 016 862**
**WO-A-81/01031**
**DE-A-1 750 707**
**DE-A-2 305 825**
**JP-A-56 059 006**

(73) Proprietor: **HITACHI CONSTRUCTION**
**MACHINERY CO., LTD.**
**2-10, Uchikanda-1-chome**
**Chiyoda-ku Tokyo 101 (JP)**

(72) Inventor: **Watanabe, Hiroshi**
**Chiyoda-House 1828-9-402, Oaza Niihari**
**Chiyodamura**
**Niihari-gun Ibaraki-ken (JP)**
Inventor: **Izumi, Eiki**
**2613-343, Oaza Shimoinayoshi**
**Chiyodamura Niihari-gun Ibaraki-ken (JP)**
Inventor: **Aoyagi, Yukio**
**Chiyoda-House 1828-4-405, Oaza Niihari**
**Chiyodamura**
**Niihari-gun Ibaraki-ken (JP)**
Inventor: **Honma, Kazuo**
**3769-21, Ami, Amimachi**
**Inashiki-gun Ibaraki-ken (JP)**
Inventor: **Nakajima, Kichio Hitachitsukuba-**
**House 2-406**
**2625-3, Oaza Shimoinayoshi Chiyodamura**
**Niihari-gun Ibaraki-ken (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

## Description

Background of the invention

This invention relates to control systems for hydraulic circuit means connecting together a variable displacement hydraulic pump and actuator means driven by the pump the operating speed of the actuator means being controlled by the position of a displacement volume varying member of the pump, and more particularly it is concerned with a control system for hydraulic circuit means capable of effecting control of acceleration of the actuator means by restricting the operating speed of the displacement volume varying member of the pump to a level below a predetermined maximum speed.

There has been proposed that the above hydraulic circuit means connecting together a variable displacement pump and an actuator driven by the pump is used for civil engineering and architectural machines, such as a hydraulic shovel, hydraulic crane, etc., and for hydraulic excavators for mining coals, for example. In a hydraulic shovel, for example, working elements including a boom, a bucket, an arm, travelling members, swivelling member, etc., are driven by the actuator of the hydraulic circuit means which may be a hydraulic motor or a hydraulic cylinder. In this type of hydraulic circuit, the operating speed of the actuator is determined by the displacement volume of the pump. For example, if the displacement volume of the hydraulic pump is suddenly increased by rapidly actuating a displacement volume varying member or a swash plate of the pump connected to a boom cylinder at initial stages of boom operation, the forces moving the boom cylinder would be suddenly increased and give a shock thereto. When it is desired to decelerate the boom cylinder, a great shock also would be suffered if the displacement volume of the pump is suddenly reduced and the boom cylinder might become uncontrollable. Also, if such shock is given when the hydraulic machine is started, the operator would be jolted and the operating lever might become temporarily uncontrollable, thereby causing hunting to occur.

To obviate the aforesaid problem, proposals have been made to control the displacement volume varying member or swash plate of the variable displacement hydraulic pump while restricting the operating speed of the swash plate to a level below a predetermined maximum speed, as disclosed in Japanese Patent Application Laid-Open JP—A—56 59006.

As aforesaid, in the hydraulic circuit means, the operating speed of the actuator is determined by the displacement volume of the pump. The displacement volume is decided by the position of the displacement volume varying member. In a swash-plate pump, the displacement volume varying member comprises a swash plate. Thus, in the hydraulic circuit means using a swash plate pump, the operating speed of the actuator may vary depending on the position of the swash plate, and acceleration of the actuator can be controlled by varying the operating speed of the swash plate.

In the control system of the prior art described hereinabove, when an operating signal indicative of a value for commanding the position of the swash plate is produced, an increasing rate or a decreasing rate of the position command value is compared with a predetermined maximum speed set beforehand. The result of this is that the position command value is increased or decreased at the predetermined maximum speed when the changing rate of the position command value is higher than the predetermined maximum value and at the changing rate of the position command value itself when the changing rate of the position command value is lower than the predetermined maximum speed, and then supplied as an output to swash plate drive means while being compared with the output of a displacement meter for detecting a position of the swash plate. Thus, the swash plate of the variable displacement hydraulic pump is controlled in such a manner that its position is shifted to a position designated by the command value of the operating signal while its operating speed is restricted to a level below the predetermined maximum speed. By effecting control in this way, it is possible to perform small shock and smooth operation of each working elements if the maximum operating speed is set at a value suiting each working element driven by the actuator. This is referred to as actuator acceleration control or swash plate speed control.

The predetermined maximum speed is set at a constant value for each operating member and should be set at a low level for a working element of high inertia, such as a boom and travelling members. Because of this, it is impossible to bring the working element of low predetermined maximum speed to a sudden halt when it is desired to stop it. Thus, for example, when a hydraulic machine is to be suddenly braked during travel, there is a great danger. Also difficulties would be experienced in stopping the working element accurately in a desired position or suddenly reversing the direction of operation of the working element.

Summary of the invention

This invention has been developed for the purpose of obviating the aforesaid disadvantages of the prior art. Accordingly, an object of the invention is to provide a control system for hydraulic circuit means capable of making the actuator perform smooth operation which is free from slackness and shock in normal operation and capable of making the actuator act nimbly when it is desired to bring the actuator to a sudden halt in case of emergency, when it is desired to accurately position the load of the actuator, and when it is desired to suddenly reverse the direction of operation of the actuator.

The above object is solved according to the invention by the characterizing features of claim 1.

Thereby for the solution of the above object a control system for hydraulic circuit means which include

a variable displacement hydraulic pump, and actuator means driven by said pump,

the operating speed of said actuator means being controlled by the position of a displacement volume varying member of said pump;

the control system includes

operating means which generate an operating signal for giving a command with regard to the position of said displacement volume varying member of said pump and thus the operating speed of the actuator means,

detector means which detect an actual position of the displacement volume varying member and generate a signal indicative of the actual position,

maximum speed setting means which previously set a first predetermined maximum speed for the operating speed of the displacement volume varying member, and

pump control means which control said displacement volume varying member based on said operating signal and detector signal while restricting the operating speed of the displacement volume varying member to a level below said first predetermined maximum speed,

is characterized in that

said maximum speed setting means further previously set a second predetermined maximum speed which is higher than said first predetermined maximum speed for the operating speed of the displacement volume varying member and is operative to select the first predetermined maximum speed when the direction of operation of the actuator means commanded by the operating signal is the same as the actual direction of operation thereof and to select the second predetermined maximum speed when the position of the displacement volume varying member commanded by the operating signal is a neutral position or when the direction of operation of the actuator means commanded by the operating signal is opposite to the actual direction of operation thereof, whereby

pump control means effect speed control of the displacement volume varying member based on the first or second predetermined maximum speed selected by the maximum speed setting means.

In one preferred embodiment of the invention, the maximum speed setting means may comprise a first means for generating said first predetermined maximum speed, and a second means for generating said second predetermined maximum speed, said first and second predetermined maximum speeds each having a constant value.

In another preferred embodiment, the maximum speed setting means may comprise a first means for generating said first predetermined maximum speed, and a second means for generating said second predetermined maximum speed, said first predetermined maximum speed being in functional relation to the operating signal in such a manner that its value increases as the absolute value of the operating signal increases.

In still another preferred embodiment, the maximum speed setting means may comprise a first means for generating said first predetermined maximum speed, and a second means for generating said second predetermined maximum speed, said second predetermined maximum speed being in functional relation to the operating signal in such a manner that the absolute value of the second predetermined maximum speed increases as the operating signal changes so as to move the displacement volume varying member from one of its normal and reverse maximum positions toward its neutral position and further increases as the operating signal changes so as to move the displacement volume varying member from near the neutral position toward the other maximum position.

Brief description of the drawings

Fig. 1 is a circuit diagram showing a preferred embodiment of the control system for hydraulic circuit means in conformity with the invention;

Fig. 2 is a circuit diagram showing in detail the pump control circuit of the control system shown in Fig. 1;

Fig. 3 is a circuit diagram showing an embodiment of the control system according to the invention as applied to hydraulic circuit means of the open circuit type;

Fig. 4 is a circuit diagram showing in detail the pump and valve control circuit of the control system shown in Fig. 3;

Fig. 5 is a graph showing the relation between the operating signal $X_L$ and a predetermined maximum speed $a_1$ set for the first predetermined maximum speed generating circuit shown in Fig. 8;

Figs. 6a and 6b are time charts showing changes occurring in the operating signal and the swash plate position respectively when the operating lever is manipulated to a maximum in the embodiment shown in Fig. 8;

Figs. 7a and 7b are time charts similar to those shown in Figs. 6a and 6b respectively but showing the changes occurring when the operating lever is manipulated in small amount in the embodiment shown in Fig. 8;

Fig. 8 is a circuit diagram showing a third embodiment of the control system for hydraulic circuit means in conformity with the invention;

Fig. 9 is a block diagram showing an arithmetic control system in which the embodiment shown in Fig. 8 is carried out by using a microcomputer;

Fig. 10 is a flow chart showing the process of operation performed by using the arithmetic control system shown in Fig. 9;

Fig. 11 is a circuit diagram showing a fourth embodiment of the control system for hydraulic circuit means in conformity with the invention;

Figs. 12—14 are graphs showing the relation between the operating signal $X_L$ and predetermined maximum speeds $a_1$, $a_2$ and $a_3$ set for the first, second and third predetermined maximum speed generating circuits respectively shown in Fig. 11;

Fig. 15 is a circuit diagram showing in detail the pump control circuit of the embodiment shown in Fig. 11;

Fig. 16 is a time chart showing changes occurring in the operating signal $X_L$ and the swash plate position signal $Y_L$ in the embodiment shown in Fig. 11;

Fig. 17 is a circuit diagram of the swash plate maximum speed setting circuit of the embodiment shown in Fig. 11 in which the second and third predetermined maximum speed generating circuits are combined into a single circuit;

Fig. 18 is a block diagram showing an arithmetic control system in which the embodiment shown in Fig. 11 is carried out by using a microcomputer; and

Fig. 19 is a flow chart showing the process of operation of the arithmetic control system shown in Fig. 18.

Description of the preferred embodiments

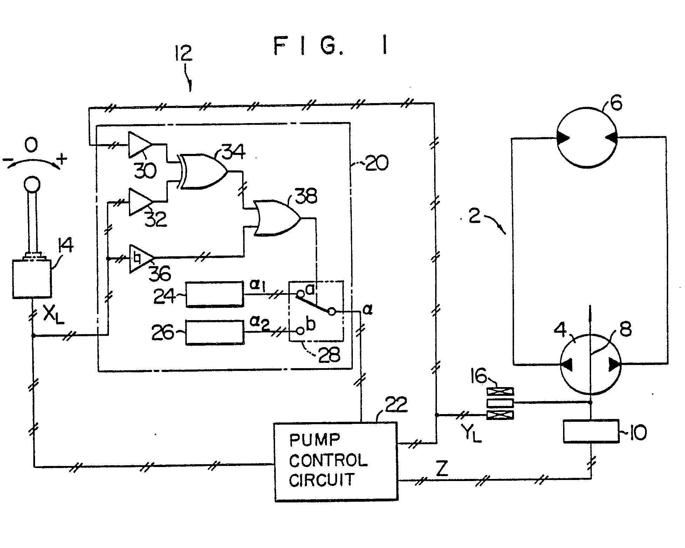

In Fig. 1, the reference numeral 2 generally designates hydraulic circuit means including a variable displacement hydraulic pump 4, and a hydraulic motor or actuator 6 driven by the pump 4 connected together in a closed circuit. In this embodiment, the pump 4 is a swash-plate pump having a swash plate 8 serving as a displacement volume varying member. The swash plate 8 has its angle or position varied by drive means 10. The pump 4 drives the actuator 6 with a displacement volume corresponding to the position of the swash plate 8. More specifically, the operating speed of the actuator 6 is determined by the position of the swash plate 8 and can be increased or decreased by varying the position of the swash plate 8. Acceleration and deceleration of the actuator 6 is determined by the operating speed of the swash plate 8.

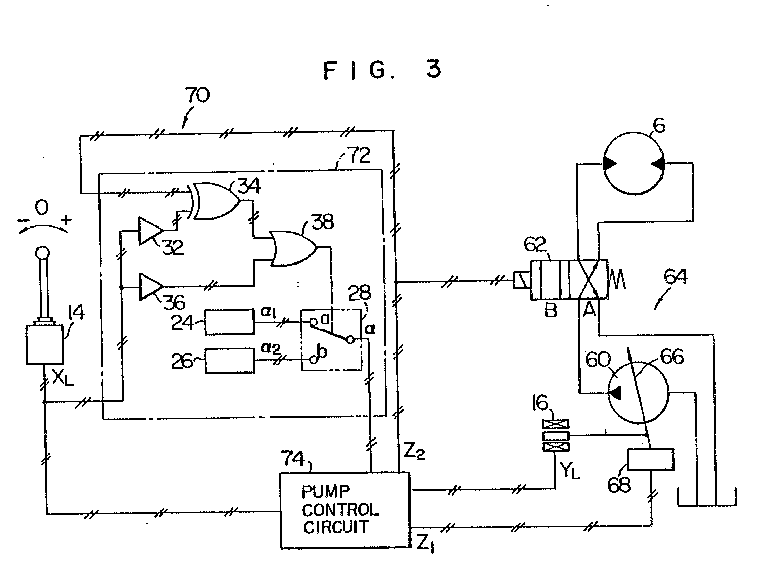

The swash plate drive means 10 may be in the form of any servo valve as desired capable of moving the swash plate 8 to a position corresponding to an input signal, or may have a construction shown in Fig. 3 of the International Laid-Open No. WO 81/01031 (and EP—A—37 838).

In the hydraulic circuit means shown in Fig. 1, accessory parts, such as flushing valves, are omitted in the interest of brevity.

The hydraulic circuit means 2 is controlled by a control system 12 comprising one embodiment of the invention. The control system 12 comprises an operating lever 14 serving as operating means for indicating the position of the swash plate 8 and the direction of operation and the operating speed of the actuator 6, a displacement meter 16 for detecting the position of the swash plate 8, a predetermined maximum speed setting circuit 20 for inputting an output signal or operating signal $X_L$ of the operating lever 14 and an output signal or swash plate position signal $Y_L$ of the displacement meter 16 to indicate a maximum value of the operating speed of the swash plate 8, and a pump control circuit 22 for inputting the operating signal $X_L$, swash plate position signal $Y_L$ and an output signal or predetermined maximum speed signal $a$ and generating an output signal Z for actuating the drive means 10.

The predetermined maximum speed setting circuit 20 comprises a first predetermined maximum speed generating circuit 24 having a first predetermined maximum speed $a_1$ set beforehand with respect to the operating speed of the swash plate 8, and a second predetermined maximum speed generating circuit 26 having a second predetermined maximum speed $a_2$ set beforehand with respect to the operating speed of the swash plate 8, the second predetermined maximum speed $a_2$ being higher than the first predetermined maximum speed $a_1$. The first predetermined maximum speed $a_1$ shows the value of an operating speed of the swash plate 8 capable of making the actuator 6 perform smooth operation free from slackness and shock in normal operation of the swash plate 8 when the manipulated variable of the operating lever 14 is not large. The second predetermined maximum speed $a_2$ shows the value of an operating speed of the swash plate 8 capable of making the actuator 6 act nimbly when it is desired to bring it to a halt in case of emergency, when it is desired to accurately position the load of the actuator 6 and when it is desired to rapidly reverse the direction of operation of the actuator 6.

The two predetermined maximum speed generating circuits 24 and 26 are connected to a switch 28 so that one of them can be selected. Comparators 30 and 32 judge whether the operating signal $X_L$ from the operating lever 14 and the detector signal $Y_L$ from the displacement meter 16 are positive or negative, respectively, and produce a high-level signal "1" when the signals $X_L$ and $Y_L$ are positive and a low-level signal "0" when they are negative, respectively. The positive operating signal $X_L$ and detector signal $Y_L$ mean the operation of the actuator 6 in one direction, and the negative signals $X_L$ and $Y_L$ means the operation of the actuator 6 in the other direction. The comparators 30 and 32 may generate either "1" or "0" when the input is zero. An exclusive OR or EXOR circuit 34 produces "0" when the two inputs are the same with each other and produces "1" when they are not the same with each other. A window comparator 36 produces "1" when the input is zero or in the vicinity of zero and produces "0" when the input has the other value. An OR circuit 38 brings the switch 28 into contact with a contact $a$ by its output "0" and into contact with a contact $b$ by its output "1". The range of inputs in the vicinity of zero which renders the output of the window comparator 36 "1" is made to agree with the dead zone set in the pump control circuit 22. The dead zone is intended to avoid inadvertent movement of the variable displacement hydraulic pump 4 which might be caused by a slight movement of the operating lever 14 located in its neutral position.

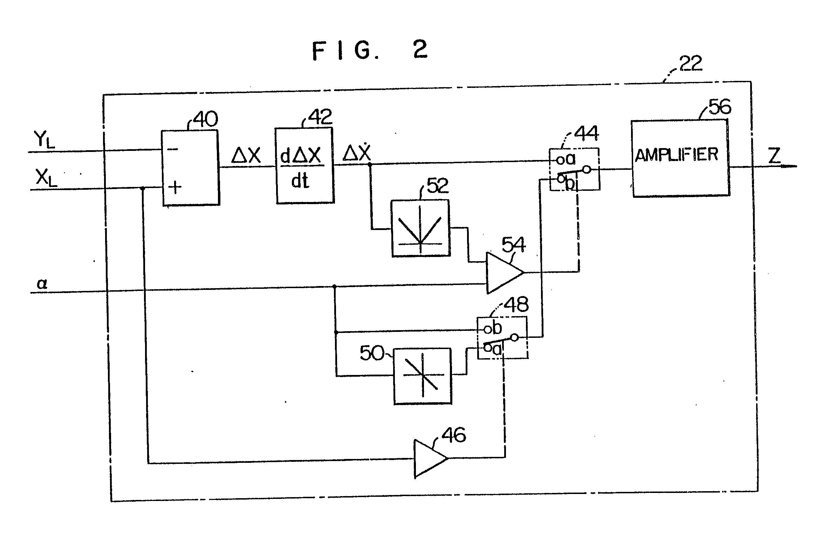

The construction of the pump control means 22 is shown in Fig. 2. The pump control means comprises an adder 40 deducting the swash plate position signal $Y_L$ from the operating signal $X_L$, and a differentiator 42 differentiating a deviation signal $\Delta X$ which is an output of the adder 40 and converting same into a changing rate $\Delta \dot{X}$ of the signal $\Delta X$ with respect to time. The changing rate $\Delta \dot{X}$ is inputted to a contact $a$ of a switch 44. The means 22 also comprises a comparator 46 which judges whether the operating signal $X_L$ is positive or negative. When $X_L \geq 0$, the comparator 46 provides a high-level signal "1" to bring a switch 48 into contact with a contact $b$ to allow a predetermined maximum speed $a$ inputted to the contact $b$ to be supplied to a contact $b$ of the switch 44; when $X_L < 0$, the comparator 46 provides a low-level signal "0" to bring the switch 48 into contact $a$ to allow a predetermined minimum speed $\overline{a}$, which has been changed into a negative value by an inverter circuit 50, to be supplied to the contact $b$ of the switch 44 from the contact $a$ of the switch 48. The means 22 also comprises an absolute value circuit 52 for setting an absolute value $| \Delta \dot{X} |$ of the output $\Delta \dot{X}$ of the differentiator 42, and a comparator 54 operative to judge which is greater $| \Delta \dot{X} |$ or $a$, and to provide an output "0" when $| \Delta \dot{X} | \geq a$ to bring the switch 44 into contact with the contact $b$ to supply $a$ or $\overline{a}$ to an amplifier 56 and to provide an output "1" when $| \Delta \dot{X} | < a$ to bring the switch 44 into contact with the contact $a$ to supply $\Delta \dot{X}$ to the amplifier 56. The signal $Z$ amplified by the amplifier 56 is supplied to the swash plate drive means 10.

Thus, the pump control circuit 22 is operative to compare the operating signal $X_L$ with the swash plate position signal $Y_L$ and absolute value $| \Delta \dot{X} |$ of the changing rate of the operating signal $X_L$ with the predetermined maximum speed $a$ and provides the signal $Z$ as an output for moving the swash plate 8 to a position commensurate with the operating signal $X_L$ at the speed $\Delta \dot{X}$ when $| \Delta \dot{X} | < a$ and provides the signal $Z$ as an output for moving the swash plate 8 to the position commensurate with the operating signal $X_L$ at the speed $a$ when $| \Delta \dot{X} | \geq a$. Accordingly, the swash plate 8 is moved to the position indicated by the operating signal $X_L$ while the operating speed is restricted to a level below the predetermined maximum speed $a$.

Operation of the control system 12 of the aforesaid construction will now be described.

If the operating lever 14 is moved to a positive side when the actuator 6 is inoperative, then the pump control circuit 22 supplies a signal $Z$ to the drive means 10 to move the position of the swash plate 8 from a neutral position to one side toward the normal maximum position. At this time, the operating signal $X_L$ from the operating lever 14 and the detector signal $Y_L$ from the displacement meter 16 both become positive, and therefore the outputs of the comparators 30 and 32 both become "1" and the output of the EXOR circuit becomes 34 becomes "0". The operating signal $X_L$ is not in the vicinity of zero, so that the output of the window comparator 36 is rendered "0". Thus, the output of the OR circuit 38 is rendered "0", thereby bringing the switch 28 into contact with the contact $a$. Thus, the first predetermined maximum speed $a_1$ is selected and inputted to the circuit 22. In this way, the circuit 22 effects control to bring the operating speed of the swash plate 8 into agreement with the first predetermined maximum speed $a_1$ when an abrupt manipulation of the operating lever 14 causes the increasing rate of the position command value of the operating signal $X_L$ to exceed the first predetermined maximum speed $a_1$. Thus, acceleration of the actuator 6 is restricted to a level below a predetermined value corresponding to the first predetermined maximum speed $a_1$.

In the case that the operating signal $X_L$ of the operating lever 14 and the detector signal $Y_L$ of the displacement meter 16 both become negative, the output of OR circuit 38 becomes "0", thereby also selecting the first predetermined maximum value $a_1$. Thus, circuit 22 effects control while restricting the operating speed of the swash plate 8 to a level below the first predetermined maximum speed $a_1$.

If the operating lever 14 is returned to the neutral position to suddenly bring the actuator 6 to a halt, then the output of window-comparator 36 becomes "1", so that the switch 28 is brought into contact with the contact $b$ and the second predetermined maximum speed $a_2$ is selected. As a result, the operating speed of the swash plate 8 is restricted to a level below the second predetermined maximum speed $a_2$ and the limit placed on the acceleration of the actuator 6 becomes higher than when the first predetermined maximum speed $a_1$ is selected. Thus, it is possible to bring the actuator to a sudden halt by greatly accelerating same.

When it is desired to change the direction of operation of the actuator from one direction to the other direction, if the operating lever 14 is instantaneously switched from the positive side to the negative side, for example, a change in the position of the swash plate 8 takes placed with a time lag behind the position command value given by the operating lever 14 because the operating speed thereof is restricted by circuit 22. Thus, the operating signal $X_L$ of the operating lever 14 becomes negative while the detector signal $Y_L$ of the displacement meter 16 remains positive. This renders the outputs of comparators 30 and 32 and EXOR circuit 34 "1", "0" and "1" respectively, so that the switch 28 is brought into contact with the contact $b$ and the second predetermined maximum speed $a_2$ is selected. Thus, the limit placed on the operating speed of the swash plate 8 is increased and the actuator 6 is greatly decelerated. As the actual position of the swash plate 8 becomes negative, the output of comparator 30 becomes "0" and the output of EXOR circuit 34 also becomes "0", thereby selecting the first predetermined maximum speed $a_1$.

When it is desired to precisely position the load of the actuator 6, the second predetermined maximum speed $a_2$ is selected by suddenly returning the operating lever 14 to a neutral position in the same manner as the actuator 6 is brought to a halt in case of emergency. Thus, the actuator 6 can be quickly stopped at a desired position by greatly decelerating same.

Another embodiment of the control system in conformity with the invention will be described by referring to Fig. 3. The invention is applied, in this embodiment, to hydraulic circuit means 64 including a variable displacement hydraulic pump 60 and the actuator 6 connected together in an open circuit through a directional control valve 62. The variable displacement hydraulic pump 60 has a swash plate 66 which is of a single direction tilting type for delivering hydraulic fluid in one direction only. Switching of the actuator 6 from one direction of operation to another is effected by the directional control valve 62. In this circuit means, the operating speed and acceleration of the actuator 6 are also restricted by varying the position and operating speed of the swash plate 66 which is actuated by drive means 68 of substantially the same construction as the swash plate drive means 10 of the embodiment shown in Fig. 1.

The control system according to the invention is generally designated by the reference numeral 70 in Fig. 3, in which parts similar to those shown in Fig. 1 are designated by like reference characters.

The control system 70 comprises a predetermined maximum speed setting circuit 72 and a pump and valve control circuit 74. The pump and valve control circuit 74 which is of the construction later described inputs the output signals $X_L$, $Y_L$ and $a$ of the operating lever 14, displacement meter 16 and predetermined maximum speed setting circuit 72 respectively and is operative to provide a swash plate control signal $Z_1$ and a valve control signal $Z_2$ to the drive means 68 and directional control valve 52, respectively. The valve control signal $Z_2$ is "1" or "0", and the directional control valve 62 is moved to a position B when $Z_2$ is "1" and to a position A when $Z_2$ is "0". The valve control signal $Z_2$ is supplied to the predetermined maximum speed setting circuit 72 in place of the swash plate position signal $Y_L$ in the embodiment shown in Fig. 1, and the signal $Z_2$ is directly inputted to the EXOR circuit 34. Thus, the circuit 72 has no comparator 30 shown in Fig. 1.

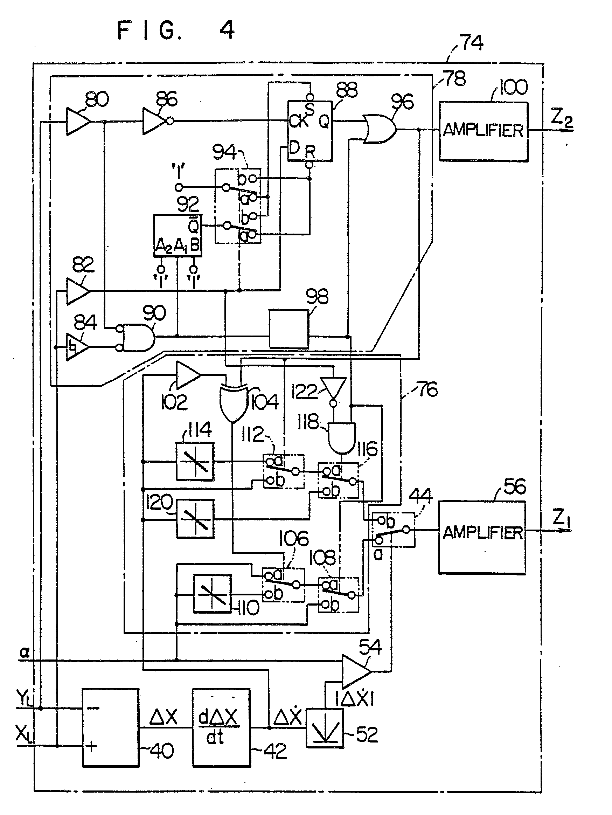

The pump and valve control circuit 74 is shown in Fig. 4 in which the circuit 74 comprises, like the circuit 22 of the first embodiment shown in Fig. 2, the adder 40, differentiator 42, absolute value circuit 52 comparator 54, switch 44 and amplifier 56 and compares the absolute value $|\Delta \dot{X}|$ of the changing rate of the operating signal $X_L$ with the predetermined maximum speed $a$ to select a value on the basis of $\Delta \dot{X}$ or $a$ depending on which of the two is larger. The switch 44 is, however, brought into contact with a contact $a$ when the output of comparator 54 is "0" and with a contact $b$ when it is "1". The control circuit 74 comprises a swash plate driving direction control circuit section 76 and a valve control circuit section 78.

In the valve control circuit section 78, a comparator 80 provides a low-level signal "0" when the swash plate position signal $Y_L$ is zero or in the vicinity of zero and otherwise provides a high-level signal "1". A comparator 82 provides "1" when the operating signal $X_L$ is positive and provides "0" when it is zero or negative. A window comparator 84 provides "0" when the operating signal is zero or in the vicinity of zero and otherwise provides "1". The output of comparator 80 is inverted by a NOT circuit 86 and inputted to a CK terminal of a D flip-flop 88. The output of comparator 82 is inputted to a D terminal of the D flip-flop 88. A NOR circuit 90 provides "1" only when the outputs of comparator 80 and window comparator 84 are both "0". The output of NOR circuit 90 is inputted to an $A_1$ terminal of a monostable multivibrator 92 which provides a "0" pulse for a predetermined period of time from a $\overline{Q}$ terminal when the inputs to $A_2$ and B terminals are both "1" and the input to the $A_1$ terminal changes from "1" to "0". A switch 94 is brought into contact with a contact $a$ when the output of comparator 82 is "0", and the signal "1" is supplied to an S terminal of the D flip-flop 88 and the output of monostable multivibrator is supplied to an R terminal of the D flip-flop 88. The switch 94 is brought into contact with a contact $b$ when the output of comparator 82 is "1", and the signals supplied to the S and R terminals of the D flip-flop 88 are reversed. The D flip-flop 88 provides from a Q terminal the same signal "1" or "0" as the input to the D terminal when the S and R terminals both have inputs "1" and the input to the CK terminal rises from "0" to "1", and provides the same signal "1" as the input to the R terminal when the input to the S terminal is "0" and the input to the R terminal is "1" and the same signal "0" as the input to the R terminal when the input to the S terminal is "1" and the input to the R terminal is "0". An OR circuit 96 provides "0" only when the output of D flip-flop 88 and the output of NOR circuit 90 supplied thereto via a delay circuit 98 are both "0". The output of OR circuit 96 is supplied as the valve control signal $Z_2$ through an amplifier 100.

In the swash plate driving direction control circuit section 76, a comparator 102 provides "1" when the changing rate $\Delta \dot{X}$ of the deviation signal $\Delta X$ is zero or positive and provides "0" when it is negative. The output of comparator 102 is supplied, together with the output of OR circuit 96, to an EXOR circuit 104. A switch 106 is in contact with a contact $a$ when the output of EXOR circuit 104 is "0" and the predetermined maximum speed signal $a$ is supplied to a contact $a$ of a switch 108, and brought into contact with a contact *b* when the output of EXOR circuit 104 is "1" and the signal a is supplied to the contact *a* of switch 108 after rendering same negative by an inverting circuit 110. The switch 108 is positioned in engagement with the contact *a* when the output of delay circuit 98 is "0", and brought into contact with a contact *b* through which the signal a is supplied when the output of delay circuit 98 is "1". A switch 112 is positioned in engagement with a contact *a* when the output of OR circuit 96 is "0" and supplies the changing rate $\Delta X$ to a contact *a* of a switch 116 by inverting same by an inverting circuit 114, and brought into contact with a contact *b* when the output of OR circuit 96 is "1" and the changing rate $\Delta X$ is supplied to the contact *a* of the switch 116 as it is. The switch 116 is in contact with the contact *a* when the output of an AND circuit 118 is "0", and brought into contact with a contact *b* through which the changing rate $\Delta X$ is supplied after being inverted by an inverting circuit 120 when the output of AND circuit 118 is "1". The AND circuit 118 is inputted thereto the output of comparator 82 which is inverted by a NOT circuit 122 and the output of delay circuit 98, and provides "1" only when the outputs of comparator 82 and delay circuit 98 are both "1".

Operation of the embodiment shown in Fig. 3 will be described. In normal operation in which the direction of operation of the actuator 6 commanded by the operating lever 14 is the same as the actual direction of operation, the pump and valve control circuit 74 provides a signal $Z_2$ of "1" or "0" due to the aforesaid construction, so that the two inputs $X_L$ and $Z_2$ to the EXOR circuits 34 are both "1" or "0" and their outputs are "0". The output of window comparator 36 is also "0". Thus, the output of OR circuit 38 is "0" and the switch 28 is brought into contact with the contact *a* to select the first predetermined maximum speed $a_1$. Thus, the operating speed of the swash plate 66 is restricted to a level below the first predetermined maximum speed $a_1$ and acceleration of the actuator 6 is kept to a level below a predetermined value corresponding to the first predetermined maximum speed $a_1$.

When it is desired to bring the actuator 6 to a sudden halt in case of emergency or to precisely position the load of the actuator 6, the operating lever 14 is suddenly returned to its neutral position and the input to the window comparator 36 becomes near zero, so that its output becomes "1" and the second predetermined maximum speed is selected. The limit placed on the operating speed of the swash plate 66 is increased and enables the swash plate 66 to be restored to the neutral position at a high speed, thereby suddenly decelerating the actuator 6 and bringing same to a halt.

If the operating lever 14 is suddenly moved from the positive side to the negative side, the output of the comparator 32 becomes "0". Meanwhile, if the directional control valve 62 were actuated depending only on the positivity or negativity of the operating signal from the operating lever 14, a great shock would occur because of a sudden reversal of the flow of hydraulic fluid. To avoid this phenomenen, pump and valve control circuit 74 is adapted, due to the aforesaid construction, to actuate the directional control valve 62 when the swash plate 66 is actually restored to the neutral position. That is, the signal $Z_2$ supplied from the control circuit 74 to the directional control valve 62 and EXOR circuit 34 remains "1" until the swash plate 66 returns to the neutral position, so that the second predetermined maximum speed $a_2$ is selected and the swash plate 66 is restored to the neutral position at a high speed. As soon as the swash plate 66 returns to the neutral position, the output signal $Z_2$ of the control circuit 74 becomes "0" to bring the directional control valve 62 to position A. The two inputs $X_L$ and $Z_2$ to the EXOR circuit 34 become "0", thereby selecting the first predetermined maximum speed $a_1$ again.

In the embodiments shown in Figs. 1 and 3, the operating lever 14 has been described as being used as operating means. However, the invention is not limited to this specific form of operating means and master means may be used as operating means when a working element is made to act as a slave by following up the operation of the master means.

The predetermined maximum speed setting circuit 20, 72 and control circuit 22, 74 are each in the form of an electronic circuit as described hereinabove and shown in the drawings. However, they may be in the form of a microcomputer or hydraulic equipment. Also, the circuit 20, 72 and the circuits 22, 74 may be combined into a single microcomputer.

As described hereinabove, according to the invention, the operating speed of the displacement volume varying member of the variable displacement hydraulic pump is restricted to a level below the first predetermined maximum speed in normal operation in which the direction of operation of the actuator commanded by an operating signal agrees with the actual direction of operation thereof. Thus, it is possible to keep acceleration of the predetermined value thereby to cause the actuator to perform shockless smooth operation. Also, when the displacement volume varying member is returned to the neutral position by an operating signal in case of emergency and positioning of the load of the actuator and when the direction of operation of the actuator is reversed from the actual direction of operation thereof, the second predetermined maximum speed higher than the first predetermined maximum speed is selected to allow the actuator to operate quickly. Thus, it is possible to conduct sudden stopping of operation of the actuator in case of emergency and accurate positioning of the load of the actuator and to effect quick reversing of the direction of operation of the actuator.

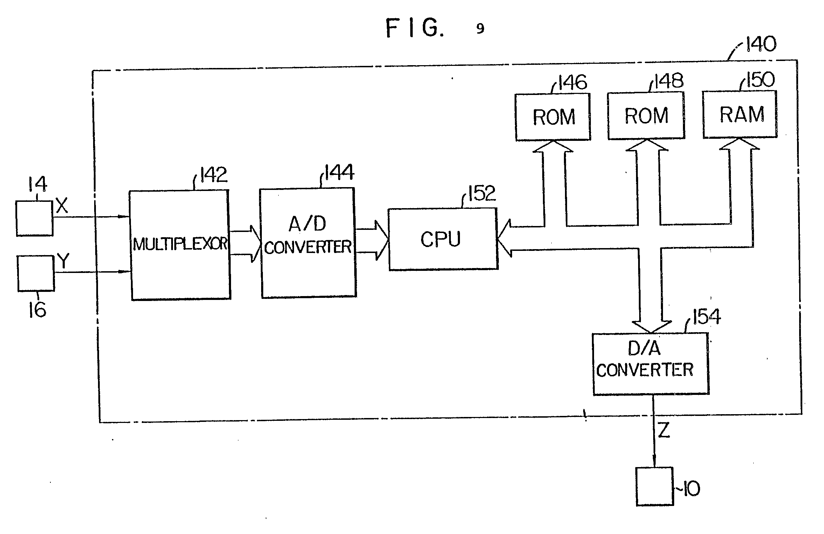

A third embodiment of the control system in conformity with the invention will be described by referring to Fig. 8, in which parts similar to those shown in Fig. 1 are designated by like reference characters. The control system generally designated by the numeral 130 is similar to that of the embodiment shown in Fig. 1 except that the predetermined maximum speed generating circuit 134 is used in place of the first predetermined maximum speed generating circuit 24 in a maximum speed setting circuit 132.

In operation of the embodiment shown in Fig. 8, the predetermined maximum speed generating circuit 134 is selected in place of the first predetermined maximum speed generating circuit 24 in the embodiment shown in Fig. 1, and the predetermined maximum speed $\alpha_1$ of the circuit 134 is provided as an output to the pump control circuit 22. In other respects, the control system 130 operates in the same manner as the control system of the embodiment shown in Fig. 1.

In the embodiment shown in Fig. 8, circuits 22 and 132 are each in the form of an electronic circuit. However, they may be formed into a single microcomputer. Fig. 9 shows an example of computerization of the circuits, in which an arithmetic control means generally designated by the numeral 140 corresponds to the circuits 22 and 132.

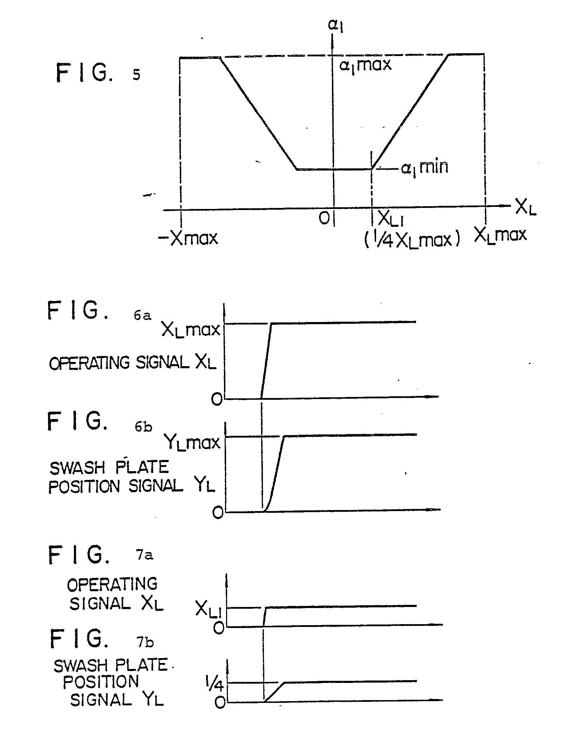

Operation of the control system 132 will be described. When the operating lever 14 is manipulated suddenly from the neutral position to the positive side to a maximum, the operating signal $X_L$ suddenly increases to $X_{L\ max}$ as shown in Fig. 6a. At this time, when the operating signal $X_L$ is in a range of low values, the maximum speed signal $\alpha_{1\ min}$ of a low value is provided as an output, and as the operating signal $X_L$ increases in value, $\alpha_1$ which becomes larger in proportion to the increase in $X_L$ is provided, and $\alpha_{1\ max}$ of a maximum value is provided when $X_L$ is maximized or near the maximum value. Thus, as shown in Fig. 6b, the tilting speed of the swash plate 8 is reduced and acceleration of the actuator 6 is also reduced at the initial stage of operation, so that the shock suffered at actuator startup can be minimized. The tilting speed of the swash plate 8 gradually increases thereafter, and acceleration of the actuator 6 also gradually increases. This avoids slackening of the operation of the actuator 6.

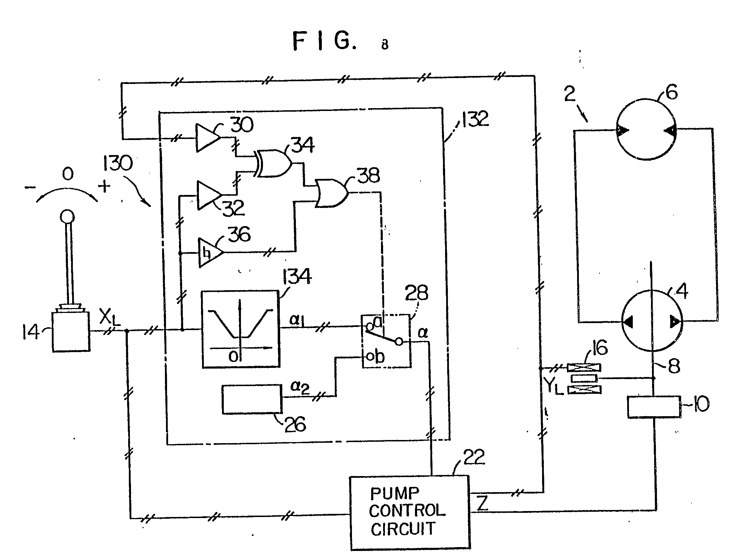

When the operating lever 14 is suddenly moved from the neutral position to the positive side for 1/4 of the maximum manipulated variable $X_{L\ max}$ to effect fine operation, the operating signal $X_L$ quickly increases to $X_{L1}$ but $\alpha_{1\ min}$ is provided as a maximum speed signal $\alpha_1$ as shown in Fig. 7a. Thus, the tilting speed of the swash plate 8 is low as shown in Fig. 7b and acceleration of the actuator 6 is small, so that no shock that would influence the fine operation is produced.

The arithmetic control means 140 comprises a multiplexor 142 providing the operating signal $X_L$ and swash plate position signal $Y_L$ by switching them, an A/D converter 144 for converting the operating signal $X_L$ and swash plate position signal $Y_L$ which are analog signals into digital signals, a ROM memory 146 storing the operation process, a ROM memory 148 storing a table of $X_L$ and $\alpha_1$ corresponding to the functions shown in Fig. 5 and storing $\alpha_2$ corresponding to the value set in the circuit 26 shown in Fig. 8, an RAM memory 150 temporarily storing the operating signal $X_L$ and swash plate position signal $Y_L$ supplied from the A/D converter 144 and the numerical values in the process of calculation, a central processing unit or CPU 152 doing calculation in accordance with the operation process stored in ROM memory 146, and a D/A converter 154 converting a digital signal from the CPU 152 into an analog signal and supplying same to the swash plate drive means 10.

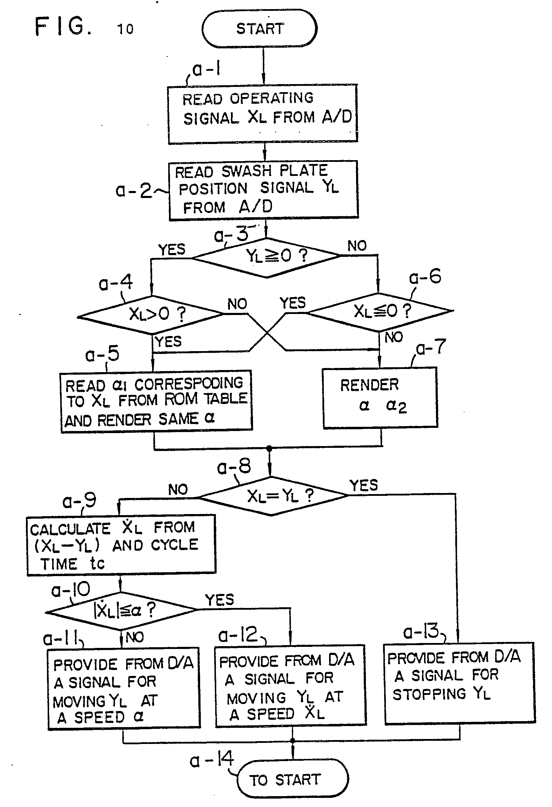

Fig. 10 is a flow chart of the operation process of the arithmetic control means 140 stored in ROM memory 146. Operation of the arithmetic control means 140 will be described in accordance with the flow chart of Fig. 10.

As the operating lever 14 is moved from the neutral position to the positive side, the operating signal $X_L$ and swash plate position signal $Y_L$ are both positive and the former is greater than the latter. Thus, steps a-1, a-2, a-3, a-4, a-5, a-8, a-9, a-10, a-11 and a-14 are followed. More specifically, in step a-5, $\alpha_1$ corresponding to the operating signal $X_L$ is read from ROM memory 148 as a predetermined maximum speed $\alpha$, and the swash plate drive means 10 is controlled so that tilting of the swash plate 8 will be carried out at a speed below the predetermined maximum speed $\alpha_1$. At this time, $\alpha_1$ may be of any value from $\alpha_{1\ min}$ to $\alpha_{1\ max}$ in accordance with an increase in $X_L$. Thus, even if the operating lever 14 is suddenly moved from the neutral position to a maximum, a shock suffered at actuator startup is small and no slackening of actuator operation ensues.

When the operating lever 14 is moved from the neutral position for 1/4 the maximum manipulated variable $X_{L\ max}$ to effect fine operation, the $\alpha_1$ read from in step a-5 is $\alpha_{1\ min}$, so that acceleration of the actuator 6 is reduced and a shock is minimized.

When the position of the swash plate 8 has a value corresponding to the manipulated variable of the operating lever 14 or when the operating signal $X_L$ and swash plate position signal $Y_L$ become equal to each other, steps a-1, a-2, a-3, a-4, a-5, a-8, a-13 and a-14 are followed to control the swash plate drive means 10 in a manner to cause the swash plate 8 to become stationary in this position. If the operating lever 14 is returned to the neutral position or moved to the negative side, then the operating signal $X_L$ becomes zero or below zero and the operating signal $X_L$ becomes smaller than the swash plate signal $Y_L$, so that steps a-1, a-2, a-3, a-4, a-7, a-8, a-9, a-10, a-11 and a-14 are followed. More specifically, in step a-7, $\alpha_2$ is read from ROM memory 148 as a predetermined maximum speed signal $\alpha$ and the swash plate drive means 10 is controlled in such a manner that the swash plate 8 is tilted at a speed below the predetermined maximum speed $\alpha_2$.

Thus, it is possible to obtain great deceleration of the actuator 6.

In the embodiment shown and described hereinabove, the operating signal $X_L$ is related to the predetermined maximum speed $\alpha_1$ as shown in Fig. 5. However, the predetermined maximum speed $\alpha_1$ may be increased in proportion to the absolute value of the operating signal $X_L$ or in proportion to the square of the operating signal $X_L$. Also, the predetermined maximum speed signal $\alpha_1$ may be increased stepwise as the absolute value of the operating signal $X_L$ increases. Stated differently, the predetermined maximum speed $\alpha_1$ is set such that its value increases as the absolute value of the operating signal $X_L$ increases.

From the foregoing description, it will be apparent that like the embodiments shown in Figs. 1—4, the embodiment shown in Figs. 8—10 is operative to restrict the operating speed of the displacement volume varying member of the variable displacement hydraulic pump to a level below the first predetermined maximum speed in normal operation in which the manipulated variable of the operating lever is great. Thus, it is possible to keep acceleration of the actuator to a level below a predetermined value and to enable the actuator to perform a shock-free smooth operation. When the operation of the actuator is interrupted in case of emergency, when the load of the actuator is positioned and when the direction of operation of the actuator is reversed, the second predetermined maximum speed higher than the first predetermined maximum speed is selected for the operating speed of the displacement volume varying member, thereby making it possible to increase the speed of operation of the actuator.

An additional advantage offered by the embodiment shown in Figs. 8—10 is that by virtue of the feature that the value of the first predetermined maximum speed is increased as the absolute value of the operating signal increases, it is possible to obtain a smooth operation of the actuator which is substantially free from shock when the actuator is started or when fine operation thereof is performed.

Although in the third embodiment the second predetermined maximum speed generating circuit 26 is used, means for calculating a derivative value $\dot{X}_L$ of the operating signal $X_L$ from the operating lever 14 may be used in place of the circuit 26, the derivative value $\dot{X}_L$ being supplied to the contact $b$ of the switch 28. With the construction, since the operating lever 14 is usually rapidly moved when it is desired to bring the actuator to a sudden halt in case of emergency, when it is desired to precisely position a load of the actuator, and when it is designed to suddenly reverse the direction of operation of the actuator, it is possible to obtain a command speed similar or higher than the above-mentioned second predetermined maximum speed based on the derivative value $\dot{X}_L$, thereby

making it possible to secure a rapid operation of the actuator.

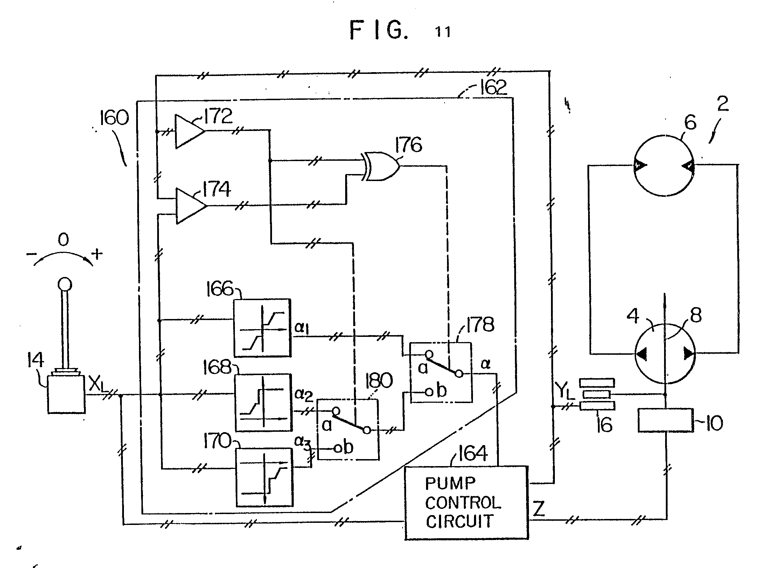

A fourth embodiment of the control system in conformity with the invention will be described by referring to Fig. 11, in which parts similar to those shown in Fig. 1 are designated by like reference characters.

The control system for controlling the hydraulic circuit 2 is generally designated by the numeral 160 and comprises an operating lever 14 serving as operating means for indicating the position of the swash plate 8 and the direction of operation and operating speed of the actuator 6, a displacement meter 16 for detecting the position of the swash plate 8, a maximum speed setting circuit 162 for inputting the output signal or operating signal $X_L$ of the operating lever 14 and the output signal or swash plate position signal $X_L$ of the displacement meter 16 and to indicate a maximum value of the operating speed of the swash plate 8, and a pump control circuit 164 for inputting the operating signal $X_L$, swash plate position signal $Y_L$ and the output signal or maximum speed signal $\alpha$ of the circuit 162 and providing an output signal Z for actuating the drive means 10, as is the case with the embodiment shown in Fig. 1.

The maximum speed setting circuit 162 comprises first, second and third predetermined maximum speed generating circuits 166, 168 and 170 respectively generating first, second and third predetermined maximum speed signals $\alpha_1$, $\alpha_2$ and $\alpha_3$ corresponding to the operating signal $X_L$, a comparator 172 judging the swash plate position signal $Y_L$ and providing a "1" signal when $Y_L \geq 0$ and providing a signal "O" when $Y_L < 0$, a comparator 174 comparing the swash plate position signal $Y_L$ with the operating signal $X_L$ and providing a "1" signal when $X_L \geq Y_L$ and providing a "0" signal when $X_L < Y_L$, an EXOR circuit 176 providing a "0" signal when the outputs of the comparators 172 and 174 are equal to each other and providing a signal "1" when they are distinct from each other, a switch 178 brought into contact with a contact $b$ when the output of EXOR circuit 176 is "1" and brought into contact with a contact $a$ when it is "0", and a switch 180 brought into contact with a contact $b$ when the output of comparator 172 is "1" and brought into contact with a contact $a$ when it is "0".

In the first predetermined maximum speed generating circuit 166, the operating signal $X_L$ is related to the first predetermined maximum speed $\alpha_1$ functionally as shown in Fig. 12. That is, when the operating signal $X_L$ is in a positive range, if $X_L$ is less than $X_{L1}$ which is indicated as $X_{L1} = 1/4 X_{L\,max}$, then $\alpha_1$ has a minimum value $\alpha_{11}$, if $X_L$ exceeds $X_{L1}$, then $\alpha_1$ has a value which is $\alpha_{11}$ plus a value which increases in proportion to an increase in $X_L$, and if $X_L$ has a predetermined value near the maximum manipulated variable $X_{L\,max}$, then $\alpha_1$ is maximized and becomes $\alpha_{12}$. When the operating signal $X_L$ is in a negative range, then $\alpha_1$ has a value inverted from $\alpha_1$ in the positive range. $\alpha_{11}$ is a value which causes no shock to occur when the actuator 6 is started to perform a fine operation, and $a_{12}$ is a value which does not cause the actuator 6 to slacken when the operating lever 14 is manipulated to a maximum from the neutral position.

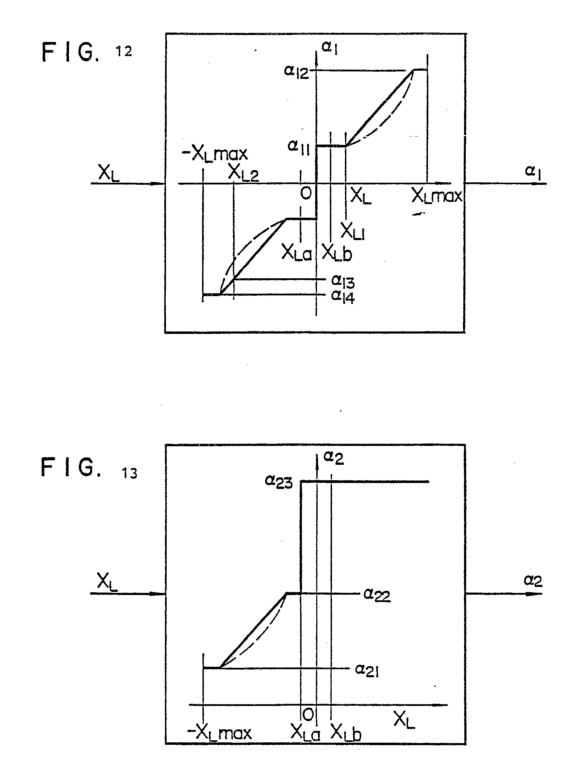

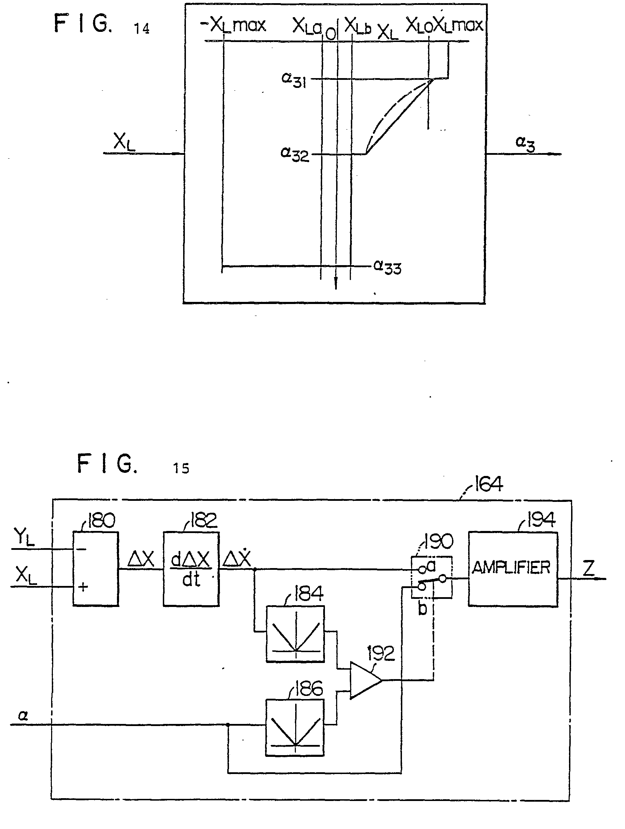

In the second predetermined maximum speed generating circuit 168, the operating signal $X_L$ is related to the second predetermined maximum speed $a_2$ functionally as shown in Fig. 13. That is, $a_2$ is in a positive range at all times. If the operating signal $X_L$ is a negative maximum manipulated variable $-X_{L\,max}$ or in the vicinity thereof, then $a_2$ has a minimum value $a_{21}$ and increases substantially linearly as $X_L$ increases from this value until $a_2$ has an intermediate value $a_{22}$ when the value of $X_L$ enters a predetermined range close to zero. If $X_L$ becomes higher than a lower limit $X_{La}$ of a dead zone in a pump control circuit subsequently to be described, then $a_2$ has a maximum value $a_{23}$. In the third predetermined maximum speed generating circuit 170, the operating signal $X_L$ is related to the third predetermined maximum speed $a_3$ functionally as shown in Fig. 14 which is in reverse to the functional relation between $X_L$ and $a_2$ shown in Fig. 13. That is, $a_3$ is in a negative range at all times. If the operating signal $X_L$ is a positive maximum manipulated variable $X_{L\,max}$ or in the vicinity thereof, then the absolute value of $a_3$ has a minimum value $a_{31}$ and increases substantially linearly as the value of $X_L$ decreases from this value until $a_3$ has an intermediate value $a_{32}$ when $X_L$ enters a predetermined range close to zero. If $X_L$ becomes less than an upper limit $X_{Lb}$ of the dead zone of the pump control circuit subsequently to be described, then the absolute value of $a_3$ has a maximum value $a_{33}$.

In the second predetermined maximum speed generating circuit 168, $a_{21}$ is a value which causes no shock to be suffered by the actuator when the operating lever is slightly withdrawn to effect fine adjustments of speed or when the operating lever is greatly withdrawn at the initial stage of deceleration with the operating lever being in a negative maximum manipulated variable position or in the vicinity thereof. In the third predetermined maximum speed generating circuit 170, $a_{31}$ has the same value as $a_{21}$ when the operating lever is in a positive maximum manipulated variable position or in the vicinity thereof. In the second predetermined maximum speed generating circuit 168, $a_{23}$ is a value which is capable of obtaining quick deceleration of the actuator when operation of the actuator is interrupted in case of emergency, when positioning of the actuator is effected and when the direction of operation of the actuator is reversed with the operating lever being in a negative manipulated variable range. In the third predetermined maximum speed generating circuit 170, $a_{33}$ is the same value as $a_{23}$ when the operating lever is in a positive manipulated variable range. Thus, $a_{23}$ and $|a_{33}|$ have greater values than the maximum value $a_{12}$ in the first

predetermined maximum speed generating circuit 166.

As shown in Fig. 15, the pump control circuit 164 comprises an adder 180 for deducting the swash plate position signal $Y_L$ from operating signal $X_L$, a differentiator 182 for differentiating the output of the adder 180 or a deviation signal $\Delta X$ and converting same into a changing rate $\Delta \dot{X}$ with respect to time, an absolute value circuit 184 for converting $\Delta \dot{X}$ into its absolute value $|\Delta \dot{X}|$, an absolute value circuit 186 for converting the predetermined maximum signal $a$ to its absolute value $|a|$, a comparator 192 inputting both $|\Delta \dot{X}|$ and $|a|$ and providing a signal "0" and bringing a switch 190 into contact with a contact $b$ when $|\Delta \dot{X}| \geq |a|$ and providing a signal "1" and bringing the switch 190 into contact with a contact $a$ when $|\Delta \dot{X}| \leq |a|$, and an amplifier 194 amplifying the output signal of the switch 190 and providing it as a pump control signal Z. The contact $a$ of the switch 190 receives $\Delta \dot{X}$, and the contact $b$ thereof receives $a$. Thus, when $|\Delta \dot{X}| < |a|$, the switch 190 is brought into contact with the contact $a$ and generates a signal Z based on $\Delta \dot{X}$; when $|\Delta \dot{X}| \geq |a|$, the switch 190 is brought into contact with the contact $b$ and generates a signal Z based on $a$.

The pump control circuit 164 has a dead zone which renders the pump control signal Z zero when the operating signal $X_L$ is between $X_{La}$ and $X_{Lb}$ in Figs. 13—15 to avoid inadvertent movement the actuator when the operating lever 14 slightly moves near its neutral position.

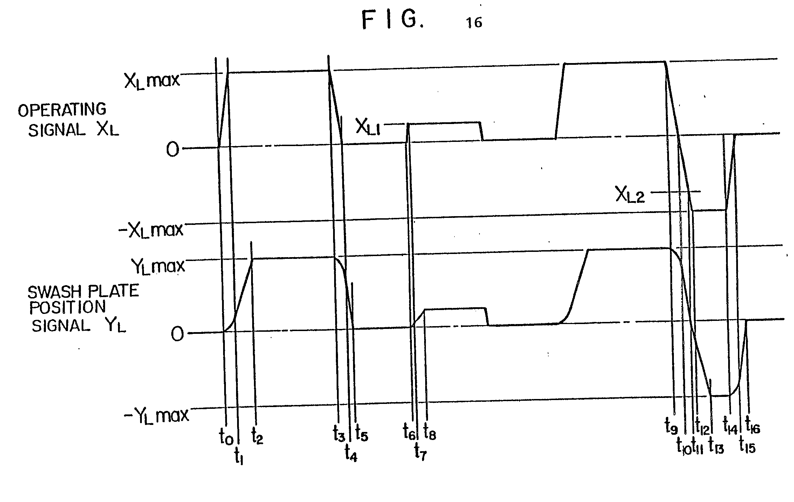

Operation of the control system 160 of the aforesaid construction will be described by referring to Fig. 16 which is a time chart.

In Fig. 16, $t_0$ indicates a point in time at which the operating signal $X_L$ and swash plate position signal are both zero. If the operating lever 14 is suddenly moved to $X_{L\,max}$ from this point in time to $t_1$, then the comparator 172 provides "1" as an output because $Y_L \geq 0$ in the predetermined maximum speed generating circuit 162 shown in Fig. 11. Since the position of the swash plate 8 shows a change with a time lag behind a change in the operating signal because of speed control of the pump control circuit 164, $X_L \geq Y_L$ and comparator 174 provides "1" as an output, so that the inputs to EXOR circuit 176 are both "1"; and EXOR circuit 176 provides as an output. This brings switch 178 into contact with the contact $a$ and selects the first predetermined maximum speed generating circuit 166 having such function as shown in Fig. 12. Thus, the maximum speed setting circuit 162 provides the value of from $a_{11}$ to $a_{12}$ as predetermined maximum speeds between $t_0$ and $t_1$ and the pump control circuit 164 supplies a signal Z to the drive means 10 to move the swash plate 8 at a speed below the predetermined maximum speeds of from $a_{11}$ to $a_{12}$ to the position $Y_{L\,max}$ corresponding to the operating signal $X_{L\,max}$. Accordingly, between $t_0$ and $t_2$, the swash plate 8 initially moves at a slow speed below $a_{12}$ and moves substantially at a normal speed of $a_{12}$ substantially after $t_1$. This

enables shockless smooth actuator startup and quick actuator operation to be obtained.

If the operating lever 14 is suddenly returned to the neutral position from $t_3$ to $t_4$ in Fig. 16, then the output of comparator 172 shown in Fig. 11 remains "1" because $Y_L \geq 0$. However, speed control of the swash plate 8 effected by the pump control circuit 164 makes $X_L$ smaller than $Y_L$ and the output of comparator 174 becomes "0". Thus, the inputs to EXOR circuit 176 become "1" and "0" and the output thereof becomes "1" thereby to bring switch 178 into contact with the contact $b$. At this time, the output of comparator 172 is "1", so that switch 180 is brought into contact with the contact $b$. As a result, the third predetermined maximum speed generating circuit 170 of the contents shown in Fig. 14 is selected. Thus, between $t_3$ and $t_5$ in Fig. 16, circuit 162 provides the value of from $\alpha_{31}$ to $\alpha_{32}$ shown in Fig. 14 as the predetermined maximum speed before the operating signal enters the dead zone of from $X_{La}$ to $X_{Lb}$ and provides $\alpha_{33}$ as the predetermined maximum speed after the operating signal enters the dead zone, and the pump control circuit 164 returns the swash plate 8 to the neutral position at such predetermined maximum speed. Accordingly, in the initial state of operation immediately after $t_3$, the swash plate 8 is moved at a slow speed of from $\alpha_{31}$ to $\alpha_{32}$ to enable deceleration of the actuator to be effected with minimized shock. Substantially between $t_4$ and $t_5$, the swash plate 8 is moved at a high speed of $\alpha_{33}$ to enable the actuator to be brought to a quick halt in case of emergency or when positioning of the load is effected. When it is desired to effect fine speed adjustments of the actuator by moving the operating lever a very small distance to the vicinity of $X_{Lo}$ shown in Fig. 14 without returning same to the neutral position, for example, $\alpha_{31}$ is provided as a predetermined maximum speed. This moves the swash plate 8 at a slow speed of $\alpha_{31}$ to enable fine speed adjustments of the actuator to be effected readily.

Then, as shown at $t_6$—$t_7$ in Fig. 16, the operating lever is moved to a position $X_{L1}$. At this time, as in the case of $t_0$—$t_2$, $Y_L \geq 0$ and $X_L \geq Y_L$, so that comparators 172 and 174 provide "1" and EXOR circuit 176 provides "0" as outputs, so that the first predetermined maximum speed generating circuit 166 is selected. At this time, in circuit 166, the predetermined maximum speed is a constant or $\alpha_{11}$, while $X_L$ is between 0 and $X_{L1}$ as shown in Fig. 12, so that the pump control circuit 164 supplies to the drive means 10 a signal Z to move the swash plate 8 at a slow speed of $\alpha_{11}$ as indicated at $t_6$—$t_8$ in Fig. 16 to a position corresponding to $X_{L1}$. Thus, even if the operating lever is inadvertently moved suddenly when fine operation of the actuator is effected in which the manipulated variable is small, actuator suffers no shock and the fine operation can be readily performed.

Sudden movement of the operating lever from $X_{L \, max}$ to $-X_{L \, max}$ as indicated at $t_9$—$t_{12}$ in Fig. 16 will be discussed. From $t_9$ to $t_{10}$ and from $t_{10}$ to $t_{11}$,

$Y_L \geq 0$ and $X_L < Y_L$, so that comparators 172 and 174 shown in Fig. 12 provide "1" and "0" respectively as outputs, and the third predetermined maximum speed generating circuit 170 of the contents shown in Fig. 14 is selected as is the case with $t_3$—$t_5$ shown in Fig. 16. Thus, $\alpha_{31} \sim \alpha_{33}$ and $\alpha_{33}$ are provided from $t_9$ to $t_{10}$ and from $t_{10}$ to $t_{11}$ respectively as the predetermined maximum speed and supplied to the pump control circuit 164 thereby to control the swash plate 8 in the same manner as described by referring to $t_3$—$t_5$. As soon as $t_{11}$ is passed and $Y_L$ becomes $Y_L < 0$, the output of comparator 172 becomes "0". With the output of comparator 174 remaining "0", the output of EXOR circuit 176 becomes "0" and switch 178 is brought into contact with the contact $a$. Thus, the first predetermined maximum speed generating circuit 166 of the contents shown in Fig. 12 is selected. This causes the predetermined maximum speed to change from $\alpha_{13}$ to $\alpha_{14}$ as shown in Fig. 12 as the operating signal changes from $X_{L2}$ at a point in time of $t_{11}$ to $-X_{L \, max}$ at a point in time of $t_{12}$ and thereafter the predetermined maximum speed becomes $\alpha_{14}$. Thus, the swash plate is controlled at a high speed as indicated at $t_{11}$—$t_{13}$ in Fig. 16. This enables quick, shock-free operation to be obtained when the direction of movement of the actuator is reversed.

If the operating lever is moved from $-X_{L \, max}$ to the neutral position as indicated at $t_{14}$—$t_{15}$ in Fig. 16, $Y_L < 0$ and, because of swash plate speed control effected by pump control circuit 164, $X_L \geq Y_L$. Therefore, the outputs of comparators 172 and 174 and the output of EXOR circuit 176 are "1" and "1" respectively. Thus, switches 180 and 178 are brought into contact with the contacts $a$ and $b$ respectively, so that the second predetermined maximum speed generating circuit 168 of the contents shown in Fig. 13 is selected. Thus, during $t_{14}$—$t_{15}$, the predetermined maximum speed of from $\alpha_{21}$ to $\alpha_{23}$ shown in Fig. 12 is provided as an output to the pump control circuit 164, and $\alpha_3$ is provided as same. This moves the swash plate initially at a slow speed of below $\alpha_{23}$ as indicated at $t_{14}$—$t_{15}$ in Fig. 16 and then at a high speed of $\alpha_{23}$ to enable the same effects as described by referring to $t_3$—$t_5$ to be achieved.

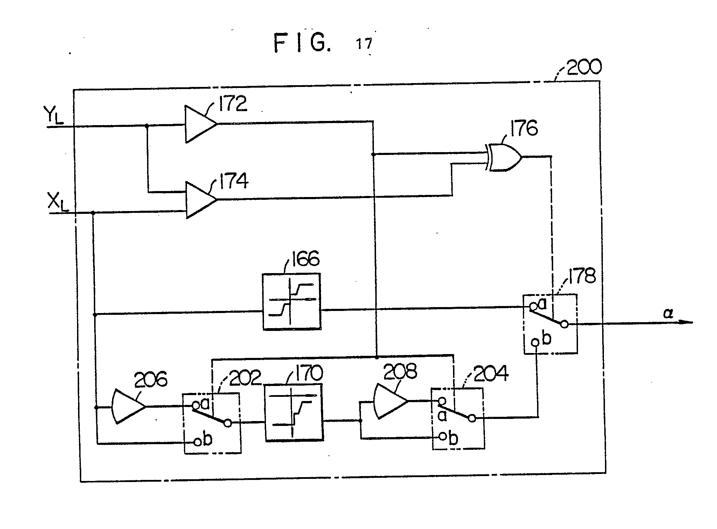

In the embodiment shown in Fig. 11, the swash plate maximum speed setting circuit 162 comprises three predetermined maximum speed generating circuits 166, 168 and 170. However, since the circuits 168 and 170 may use functions in inverted relation to each other, it is possible to enable circuits 166 and 168, for example, to obtain the same function as the embodiment shown in Fig. 11. Fig. 17 shows a swash plate maximum speed setting circuit 200 incorporating this modification. In the figure, parts similar to those shown in Fig. 11 are designated by like reference characters, and the circuit 170 is referred to as a second predetermined maximum speed generating circuit.

The numerals 202 and 204 designate switches each brought into contact with a contact *a* when the output of comparator 172 is "0" and into contact with a contact *b* when it is "1". The numerals 206 and 208 designate inverter amplifiers each providing an output by inverting an input signal from positive to negative and vice versa.

In circuit 200, when $Y_L \geq 0$ and $X_L \geq Y_L$ and $X_L < 0$ and $Y_L < X_L$, the first predetermined maximum speed generating circuit 166 is selected as is the case with the circuit 162 shown in Fig. 11. When $Y_L \geq 0$ and $X_L < Y_L$, switches 202 and 204 are both brought into contact with the contact *b* to select the second predetermined maximum speed generating circuit 170 as it is as is the case with the circuit 162 shown in Fig. 11. When $Y_L < 0$ and $X_L \geq Y_L$, switches 202 and 204 are both brought into contact with the contact *a*. Thus, the operating signal $X_L$ inputted to the second predetermined maximum speed generating circuit 170 has its sign inverted by the inverter amplifier 206. For example, when $X_L = X_{L\ max}$, the input to the circuit 170 becomes $-X_{L\ max}$ and the $\alpha_{33}$ shown in Fig. 14 is read out and has its sign inverted by the inverter amplifier 208, so that $\alpha_{33}$ has the same meaning as the $\alpha_{23}$ shown in Fig. 13. If, in the circuit 162 shown in Fig. 11, the $\alpha_2$ and $\alpha_3$ of the second and third predetermined maximum speed generating circuits 168 and 170 respectively corresponding to the $X_L$ and the $X_L$ that has had its sign inverted are equal to each other in absolute value, then the same operation as described by referring to the embodiment shown in Fig. 11 can be obtained with the circuit 200 shown in Fig. 17.

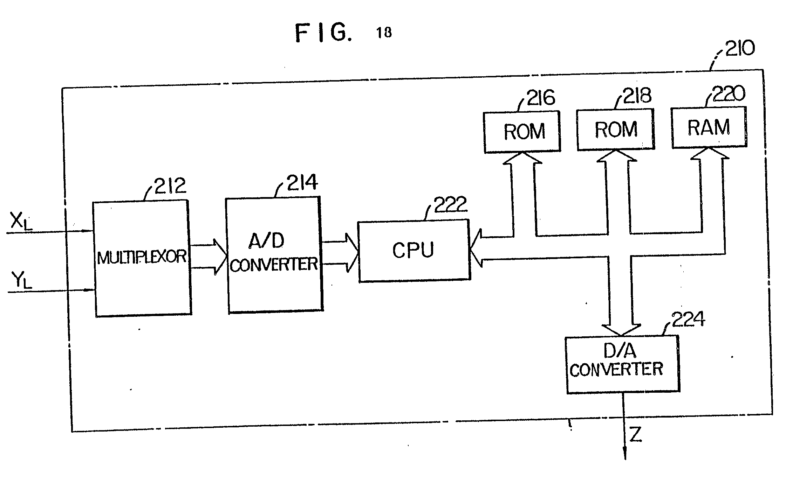

In the embodiment shown in Fig. 11, circuits 162 and 164 are each in the form of an electronic circuit. However, these two circuits can be formed as a single microcomputer. Fig. 18 shows a modification of the embodiment shown in Fig. 9 in which an arithmetic control means corresponding to the circuits 162 and 164 is generally indicated by the numeral 210.

The arithmetic control means 210 comprises a multiplexer 212 for switching between the swash plate position command signal or operating signal $X_L$ from the operating lever 14 and the swash plate position signal $Y_L$ from the displacement meter 16, an A/D converter 214 for converting the operating signal $X_L$ and swash plate position signal $Y_L$ which are analog signals into digital signals, an ROM memory 216 storing the process of operation of the arithmetic control means 210, an ROM memory 218 storing three tables (i), (ii) and (iii) of the $X_L$ and predetermined maximum speeds $\alpha_1$, $\alpha_2$ and $\alpha_3$ corresponding to the functions shown in Figs. 13—15, an RAM memory 220 for temporarily storing the $X_L$ and $Y_L$ from the A/D converter and the numerals in the process of calculation, a central processing unit or CPU 222 for doing calculation on a swash plate drive signal in accordance with the operation process of ROM memory 216 and a D/A converter 224 for converting a signal from CPU 222 from a digital signal into an analog signal and supplying a control signal Z to the drive means 10.

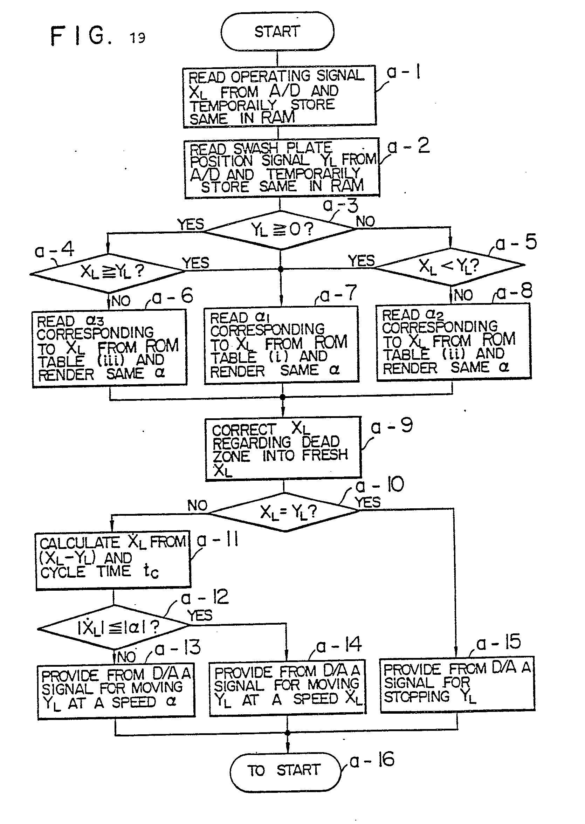

Fig. 19 is a flow chart of the process of operation of the arithmetic control means 210 stored in ROM memory 210. Operation of the arithmetic control means 210 will be described by referring to the flow chart shown in Fig. 19.

In steps a-1 and a-2, the arithmetic control means 210 reads the operating signal $X_L$ and swash plate position signal $Y_L$ through the multiplexor 212 and A/D converter 214 shown in Fig. 18 and temporarily store same in RAM memory 220. In step a-3, it is judged whether or not $Y_L \geq 0$. If $Y_L \geq 0$, then the process proceeds to step a-4; if $Y_L < 0$, the process proceeds to step a-5. In step a-4, it is judged whether or not $X_L \geq Y_L$. If $X_L \geq Y_L$, the process proceeds to step a-7; if $X_L < Y_L$, the process proceeds to step 6. Meanwhile, in step a-5, it is judged whether or not $X_L < Y_L$. When $X_L < Y_L$, the process proceeds to step a-7; when $X_L \geq Y_L$, the process proceeds to step a-8. In step a-6, the predetermined maximum speed $\alpha_3$, corresopnding to $X_L$ is read from the ROM table (iii) of the same contents as shown in Fig. 14 stored in ROM 218 and rendered $\alpha$. Likewise, in step a-7, $\alpha_1$ is read from the ROM table (i) of the same contents as shown in Fig. 12, and in step a-8, $\alpha_2$ is read from the ROM table (ii) of the same contents as shown in Fig. 13, $\alpha_1$ and $\alpha_2$ being rendered $\alpha$. Stated differently, in the operation from $t_o$ to $t_2$ shown in Fig. 16, the steps a-3, a-4 and a-7 are followed, and the ROM table (i) of the same contents as shown in Fig. 12 is selected. In the operation from $t_3$ to $t_5$, the steps a-3, a-4 and a-6 are followed and the ROM table (iii) of the same contents as shown in Fig. 14 is selected, and in the operation from $t_{14}$ to $t_{16}$, the steps a-3, a-5 and a-8 are followed and the ROM table (ii) of the same contents as shown in Fig. 14 is selected. The steps followed so far perform the same functions as the swash plate maximum speed setting circuit 162 shown in Fig. 11.

In step a-9, the value of the operating signal $X_L$ near zero position is revised to a value of zero position which is used as a command value for the swash plate 8 serving as a fresh $X_L$. In step a-10, it is judged whether or not $X_L = Y_L$. If $X_L = Y_L$, then the process proceeds to step a-15 in which the signal Z for stopping swash plate 8 is supplied from D/A converter 224 to drive means 10. Then the process proceeds to step a-11 before returning to the start. If $X_L = Y_L$ in step a-10, then the process proceeds to step a-11 in which $\dot{X}_L$ is obtained by a formula $\dot{X}_L = (X_L - Y_L)/t_c$ from $X_L$, $Y_L$ and the time $t_c$ elapsing from the "start" of the program (operation process) to step a-16. The $\dot{X}_L$ represents a swash plate speed at which the swash plate is moved when the signal of the operating lever is used as a command signal. In step a-12, it is judged whether or not $|\dot{X}_L| \leq |\alpha|$. If $|\dot{X}_L| \leq |\alpha|$, then the process proceeds to step a-14 in which D/A converter 224 provides a signal Z for moving the swash plate at a speed of $\dot{X}_L$. In step a-16, the process returns to the start. Meanwhile, in step a-12, the process proceeds to step a-13 when $|\dot{X}_L| > |a|$ and provides a signal for moving the swash plate 8 at a speed $a$.

By virtue of the aforesaid construction and operation, the arithmetic control means 210 is capable of performing the same function as the circuits 162 and 164 shown in Fig. 11.

In the predetermined maximum speed generating circuits 166, 168 and 170, the relations between $a_1$, $a_2$ and $a_3$ and $X_L$ have been described as having characteristics indicated by solid lines in Figs. 12—14. However, $a_1$, $a_2$ and $a_3$ may be varied into curved as indicated by broken lines or may be changed stepwise.

From the foregoing description, it will be appreciated that in the embodiment shown in Figs. 11—19, the operating speed of the displacement volume varying member of the variable displacement hydraulic pump is controlled, as in the embodiment shown in Figs. 1—4, in such a manner that it is restricted to a value below the first predetermined maximum speed in normal operation in which the manipulated variable is great, so that it is possible to keep acceleration of the actuator to a level below a predetermined value. Thus, the actuator can be made to perform a smooth operation free from shock. When the actuator is brought to a halt in case of emergency, when the load of the actuator is positioned and when the direction of operation of the actuator is reversed, the operating speed of the displacement volume varying member is controlled in such a manner that the second or third predetermined maximum speed higher than the first predetermined maximum speed is selected to cause the actuator to operate more quickly.

In the embodiment shown in Figs. 11—19, the following additional effect can be achieved as is the case with the embodiment shown in Figs. 8—10. The first predetermined maximum speed has its absolute value increased as the absolute value of the operating signal increases, so that the actuator can be made to perform a shock-free, smooth operation even when the actuator is started and when fine operation is performed.

In the embodiment shown in Figs. 11—19, the second and third predetermined maximum speeds have their absolute values increased as the operating signal becomes smaller or larger depending on the direction in which the operating signal undergoes a change. By virtue of this features, no shock is produced when the operating lever located in the maximum position or in the vicinity thereof is slightly withdrawn, thereby enabling fine speed adjustments to be effected readily. Also, when the actuator is brought to a halt in case of emergency, when the load of the actuator is positioned and when the direction of operation of the actuator is reversed, it is possible to make the actuator perform operation quickly.

## Claims

1. A control system (12, 70, 130, 160) for hydraulic circuit means (2, 64) which include a variable displacement hydraulic pump (4, 60) and

actuator means (6) driven by said pump, the operating speed of said actuator means being controlled by the position of a displacement volume varying member (8, 66) of said pump;

the control system includes

operating means (14) which generate an operating signal ($X_L$) for giving a command with regard to the position of said displacement volume varying member of said pump and thus the operating speed of the actuator means,

detector means (16) which detect an actual position of the displacement volume varying member and generate a signal ($Y_L$) indicative of the actual position,

maximum speed setting means (20, 72, 132, 162, 200) which previously set a first predetermined maximum speed ($a_1$) for the operating speed of the displacement volume varying member, and

pump control means (22, 74, 164) which control said displacement volume varying member based on said operating signal and detector signal while restricting the operating speed of the displacement volume varying member to a level below said first predetermined maximum speed,

characterized in that:

said maximum speed setting means (20, 72, 132, 162, 200) further previously set a second predetermined maximum speed ($a_2$, $a_3$) which is higher than said first predetermined maximum speed ($a_1$) for the operating speed of the displacement volume varying member (8, 66), and is operative to select the first predetermined maximum speed when the direction of operation of the actuator means (6) commanded by the operating signal ($X_L$) is the same as the actual direction of operation thereof and to select the second predetermined maximum speed when the position of the displacement volume varying member commanded by the operating signal is a neutral position or when the direction of operation of the actuator means commanded by the operating signal is opposite to the actual direction of operation thereof, whereby

pump control means (22, 74, 164) effect speed control of the displacement volume varying member based on the first or second predetermined maximum speed selected by the maximum speed setting means.

2. A control system as claimed in claim 1, characterized in that said maximum speed setting means (20, 72) comprise a first means (24) for generating said first predetermined maximum speed ($a_1$), and a second means (26) for generating said second predetermined maximum speed ($a_2$), said first and second predetermined maximum speeds each having a constant value.

3. A control system as claimed in claim 2, characterized in that said maximum speed setting means (20) comprise switch means (28) having a first position in which said first predetermined maximum speed ($a_1$) is provided as an output to said pump control means (22), and a second position in which said second predetermined maximum speed ($a_2$) is provided as an output to said pump control means, and switch actuating means (30—38) operative to bring said switch means (28) to said first position when the operating signal ($X_L$) and the detector signal ($Y_L$) are both positive or negative and to bring said switch means to said second position when the operating signal and the detector signal differ from each other in sign or when the operating signal has a value in the vicinity of zero.

4. A control system as claimed in claim 2, characterized in that said hydraulic circuit means (64) further include a directional control valve (62) for causing said actuator means (6) to operate in normal and reverse directions when valve control signals ($Z_2$) of "1" and "0" are received respectively, wherein said maximum speed setting means (72) comprise switch means (28) having a first position in which said first predetermined maximum speed ($a_1$) is provided as an output to said pump control means (74), and a second position in which said second predetermined maximum speed ($a_2$) is provided as an output to said pump control means, and switch actuating means (32—38) operative to bring the switch means to said first position when the operating signal ($X_L$) is positive and said valve control signal ($Z_2$) is "1" or when the operating signal is negative and the valve control signal is "0" and to bring the switch means to said second position when the operating signal is positive and the valve control signal is "0", when the operating signal is negative and the valve control signal is "1" or when the operating signal has a value in the vicinity of zero.

5. A control system as claimed in claim 1, characterized in that said maximum speed setting means (132) comprise a first means (134) for generating said first predetermined maximum speed ($a_1$), and a second means (26) for generating said second predetermined maximum speed ($a_2$), said first predetermined maximum speed being in functional relation to the operating signal ($X_L$) in such a manner that its value increases as the absolute value of the operating signal increases.

6. A control system as claimed in claim 5, characterized in that said maximum speed setting means (132) comprise switch means (28) having a first position in which the first predetermined maximum speed ($a_1$) is provided as an output to the pump control means (22), and a second position in which the second predetermined maximum speed ($a_2$) is provided as an output to the pump control means, and switch actuating means (30—38) operative to bring the switch means to said first position when the operating signal ($X_L$) and the detector signal ($Y_L$) are both positive or negative and to bring the switch means to said second position when the operating signal and the detector signal differ from each other in sign or when the operating signal has a value in the vicinity of zero.

7. A control system as claimed in claim 1, characterized in that said maximum speed setting means (162, 200) comprise a first means (166) for generating said first predetermined maximum speed ($a_1$), and a second means (168, 170) for generating said second predetermined maximum speed ($a_2$, $a_3$), said second predetermined maximum speed ($a_2$, $a_3$) being in functional relation to the operating signal ($X_L$) in such a manner that the absolute value of the second predetermined maximum speed increases as the operating signal changes so as to move the displacement volume varying member (8) from one of its normal and reverse maximum positions toward its neutral position and further increases as the operating signal changes so as to move the displacement volume varying member (8) from near the neutral position toward the other maximum position.

8. A control system as claimed in claim 1, characterized in that said maximum speed setting means (162) comprise a first means (166) for generating said first predetermined maximum speed ($a_1$), and second and third means (168, 170) for generating said second predetermined maximum speed ($a_2$, $a_3$) said second predetermined maximum speed ($a_2$) generated by said second means (168) being positive in value and in functional relating to the operating signal in such a manner that its value increases as the operating signal changes so as to move the displacement volume varying member (8) from its reverse maximum position toward its neutral position and further increases as the operating signal changes so as to move the displacement volume varying member from near its neutral position toward its normal maximum position, and said second predetermined maximum speed ($a_3$) generated by said third means (170) being negative in value and in functional relation to the operating signal in such a manner that the absolute value of the second predetermined maximum speed increases as the operating signal changes so as to move the displacement volume varying member from its normal maximum position toward its neutral position and further increases as the operating signal changes so as to move the displacement volume varying member from near its neutral position toward its reverse maximum position.

9. A control system as claimed in claim 7 or 8, characterized in that said first predetermined maximum speed ($a_1$) is in functional relation to the operating signal ($X_L$) in such a manner that the absolute value of the first predetermined maximum speed increases as the operating signal changes so as to move the displacement volume varying member (18) away from its neutral position.

10. A control system as claimed in claim 7 or 8, characterized in that said first predetermined maximum speed ($a_1$) is in functional relation to the operating signal ($X_L$) in such a manner that the first predetermined maximum speed has a positive value which increases as the operating signal changes so as to move the displacement volume varying member from its neutral position toward the normal maximum position and the first predetermined maximum speed has a negative value of which the absolute value increases as the operating signal changes so as to move the displacement volume varying member from its neutral position toward the reverse maximum position.

11. A control system as claimed in claim 8, characterized in that said maximum speed setting means (162) comprise a first switch means (180) having a first position in which said second predetermined maximum speed ($\alpha_2$) is provided as an output and a second position in which said third predetermined maximum speed ($\alpha_3$) is provided as an output, and a second switch means (178) having a first position in which said first predetermined maximum speed ($\alpha_1$) is provided as an output to said pump control means (164) and a second position in which the output of said first switch means (180) is provided as an output to said pump control means, a first switch actuating means (172) operative to bring said first switch means to said first position when the detector signal ($Y_L$) is negative and to said second position when it is positive, and a second switch actuating means (172—176) operative to bring said second switch means to said first position when the operating signal ($Y_L$) is greater than the detector signal ($Y_L$) and the latter is positive or when the operating signal is smaller than the detector signal and the latter is negative and to bring said second switch means to said second position when the operating signal is smaller than the detector signal and the latter is positive or when the operating signal is greater than the detector signal and the latter is negative.

**Revendications**

1. Système de commande (12, 70, 130, 160) pour un circuit hydraulique (2, 64) comprenant:
une pompe à cylindrée variable (4, 60) et
un actionneur (6) entraîné par ladite pompe,
la vitesse de fonctionnement dudit actionneur étant commandée par la position d'un élément (8, 66) qui fait varier la cylindrée de ladite pompe;
le système de commande comprend:
un moyen d'actionnement (14) qui génère un signal d'actionnement ($X_L$) donnant une commande relative à la position dudit élément faisant varier la cylindrée de ladite pompe et donc la vitesse de fonctionnement du moteur,
un détecteur (16) qui détecte une position réelle de l'élément faisant varier la cylindrée et génère un signal ($Y_L$) indicatif de la position réelle,
des moyens de réglage de vitesse maximale (20, 72, 132, 162, 200) qui définissent au préalable une première vitesse maximale ($\alpha_1$) prédéterminée en tant que vitesse de fonctionnement de l'élément faisant varier la cylindrée, et
des moyens de commande de pompe (22, 74, 164) qui commandent l'élément faisant varier le volume de la cylindrée en fonction dudit signal d'actionnement et dudit signal de détecteur tout en limitant la vitesse de fonctionnement de l'élément faisant varier la volume de la cylindrée à un niveau inférieur à celui de la première vitesse maximale prédéterminée,
caractérisé par le fait que lesdits moyens de réglage de vitesse maximale (20, 72, 132, 162, 200) règlent en outre au préalable une second vitesse maximale prédéterminée ($\alpha_2$, $\alpha_3$) qui est supérieure à ladite première vitesse maximale prédéterminée ($\alpha_1$) en tant que vitesse de fonctionnement de l'élément faisant varier la volume de la cylindrée (8, 66) et dont l'objet consiste à sélectionner la première vitesse maximale prédéterminée quand le sens de fonctionnement de l'actionneur (6) commandé par le signal d'actionnement ($X_L$) est le même que le sens réel de fonctionnement de cet actionneur, et de sélectionner la seconde vitesse maximale prédéterminée quand la position de l'élément faisant varier le volume de la cylindrée et commandée par le signal d'actionnement est une position neutre ou quand le sens de fonctionnement de l'actionneur commandé par le signal d'actionnement est opposé au sens réel de fonctionnement de cet actionneur, de sorte que les moyens de commande de pompe (22, 74, 164) effectuent une commande de vitesse de l'élément qui fait varier le volume de la cylindrée d'après la première ou la seconde des vitesses maximales prédéterminées sélectionnées par les mmyens de réglage de vitesse maximale.

2. Système de commande selon la revendication 1, caractérisé par le fait que les moyens de réglage de vitesse maximale (20, 72) comprennent un premier moyen (24) de génération de ladite première vitesse maximale prédéterminée ($\alpha_1$) et une second moyen (26) de génération de ladite second vitesse maximale prédéterminée ($\alpha_2$), lesdites première et seconde vitesses maximales prédéterminées ayant chacune une valeur constante.

3. Système de commande selon la revendication 2, caractérisé par le fait que les moyens de réglage de vitesse maximale (20) comprennent un moyen de commutation (28) ayant une première position dans laquelle ladite première vitesse maximale prédéterminée ($\alpha_1$) est délivrée en tant que sortie auxdits moyens de commande de pompe (22), et une seconde position dans laquelle la seconde valeur maximale prédéterminée ($\alpha_2$) est délivrée en tant que sortie auxdits moyens de commande de la pompe, et les moyens de manoeuvre de commutateur (30—38) ayant pour objet d'amener ledit moyen de commutation (28) dans ladite première position lorsque le signal d'actionnement ($X_L$) et le signal de détecteur ($Y_L$) sont tous deux positifs ou négatifs et d'amener ledit moyen de commutation dans la seconde position lorsque le signal d'actionnement et le signal de détecteur sont différents l'une de l'autre par leur signe ou lorsque le signal d'actionnement a une valeur située au voisinage de zèro.

4. Système de commande selon la revendication 2, caractérisé par le fait que ledit circuit hydraulique (64) comprend en outre un vanne directionnelle de commande (62) qui fait fonctionner l'actionneur (6) dans le sens normal et dans le sens inverse lorsque les signaux de commande de vanne $(Z_2)$ reçus sont respectivement "1" et "0", dans lequel ledit moyen de réglage de vitesse maximale (62) comprend un moyen de commutation (28) ayant une première position dans laquelle ladite première vitesse maximale prédéterminée $(\alpha_1)$ est délivrée en tant que sortie auxdits moyens de commande de pompe (74) et une seconde position dans laquelle ladite seconde vitesse maximale prédéterminée $(\alpha_2)$ est délivrée en tant que sortie auxdits moyens de commande de pompe et les moyens de manoeuvre de commutateur (32—38) ont pour objet d'amener le moyen de commutation dans ladite première position lorsque le signal d'actionnement $(X_L)$ est positif et ledit signal de commande de vanne $(Z_2)$ est "1" ou lorsque le signal d'actionnement est négatif et le signal de commande de vanne est "0" et d'amener ledit moyen de commutation dans ladite seconde position lorsque le signal d'actionnement est positif et le signal de commande de vanne est "0", quand le signal d'actionnement est négatif et le signal de commande de vanne est "1" ou lorsque le signal d'actionnement a une valeur située au voisinage de zéro.

5. Système de commande selon la revendication 1, caractérisé par le fait que les moyens (132) de réglage de vitesse maximale comprennent un premier moyen (134) de génération de ladite première vitesse maximale prédéterminée $(\alpha_1)$ et un second moyen (26) de génération de ladite seconde vitesse maximale prédéterminée $(\alpha_2)$, ladite première vitesse maximale prédéterminée ayant une relation fonctionnelle avec le signal d'actionnement $(X_L)$ de manière telle que sa valeur augmente quand la valeur absolue du signal d'actionnement augmente.

6. Système de commande selon la revendication 5, caractérisé par le fait que lesdits moyens de réglage de vitesse maximale (132) comprennent un moyen de commutations (28) ayant une première position dans laquelle la première vitesse maximale prédéterminée $(\alpha_1)$ est délivrée en tant que sortie aux moyens de commande de pompe (22), et une seconde position dans laquelle la seconde vitesse maximale prédéterminee $(\alpha_2)$ est délivrée en tant que sortie auxdits moyens de commande de pompe, et des moyens de manoeuvre de commutations (30—38) ayant pour objet d'amener le moyen de commutations dans une première position quand le signal d'actionnement $(X_L)$ et le signal de détecteur $(Y_L)$ sont tous deux positifs ou négatifs et d'amener le moyen de commutations dans ladite second position lorsque le signal d'actionnement et le signal de détecteur diffèrent l'un de l'autre par leur signe ou lorsque le signal d'actionnement a une valeur qui se situe au voisinage de zéro.

7. Système de commande selon la revendication 1, caractérisé par le fait que lesdits moyens de réglage de vitesse maximale (162, 200) comprennent un premier moyen (166) de génération de ladite première vitesse maximale prédéterminée $(\alpha_1)$, et un second moyen (168, 170) de génération de ladite seconde vitesse maximale prédéterminée $(\alpha_2, \alpha_3)$, ladite seconde vitesse maximale prédéterminée $(\alpha_2, \alpha_3)$ étant en relation fonctionnelle avec le signal d'actionnement $(X_L)$ de façon telle que la valeur absolue de la seconde vitesse maximale prédéterminée augmente quand le signal d'actionnement change afin de déplacer l'élément faisant varier le volume de la cylindrée (8) de l'une de ses positions maximales normale et inverse vers sa position neutre et qui augmente encore quand le signal d'actionnement change afin de déplacer l'élément qui fait varier le volume de la cylindrée (8) de sa position voisine de la position neutre vers l'autre position maximale.

8. Système de commande selon la revendication 1, caractérisé par le fait que lesdits moyens de réglage de vitesse maximale (162) comprennent un premier moyen (166) de génération de ladite première vitesse maximale prédéterminée $(\alpha_1)$, et des second et troisième moyens (168, 170) de génération de ladite second vitesse maximale prédéterminée $(\alpha_2, \alpha_3)$, ladite seconde vitesse maximale prédéterminée $(\alpha_3)$ générée par ledit second moyens (168) ayant une valeur positive et étant en relation fonctionnelle avec le signal d'actionnement de manière telle que sa valeur augmente quand le signal d'actionnement varie afin de déplacer l'élément (8) qui fait varier le volume de la cylindrée de sa position maximale inverse vers sa position neutre et qui augmente encore quand le signal d'actionnement varie afin de déplacer l'élément qui fait varier le volume de la cylindrée de sa position voisine de la position neutre vers sa position maximale normale, et ladite seconde vitesse maximale prédéterminée $(\alpha_3)$ générée par ledit troisième moyen (170) ayant une valeur negative et étant en relation fonctionnelle avec le signal d'actionnement de manière telle que la valeur absolue de la seconde vitesse maximale prédéterminée augmente quand le signal d'actionnement varie afin de déplacer l'élément qui fait varier le volume de la cylindrée de sa position maximale normale vers sa position neutre et de l'augmenter encore quand le signal d'actionnement varie afin de déplacer l'élément faisant varier le volume de la cylindrée, de la proximité de sa position neutre vers sa position maximale inverse.

9. Système de commande selon la revendication 7 ou 8, caractérisé par le fait que ladite première vitesse maximale prédéterminée $(\alpha_1)$ est en relation fonctionnelle avec le signal d'actionnement $(X_L)$ de manière telle que la valeur absolue de la première vitesse maximale prédéterminée augmente quand le signal d'actionnement varie afin d'écarter de sa position neutre l'élément (18) faisant varier le volume de la cylindrée.

10. Système de commande selon la revendication 7 ou 8, caractérisé par le fait que ladite première vitesse maximale prédéterminée ($\alpha_1$) est en relation fonctionnelle avec le signal d'actionnement ($X_L$) de façon telle que la première vitesse maximale prédéterminée a une valeur positive qui augmente quand le signal d'actionnement varie afin de déplacer l'élément faisant varier le volume de la cylindrée depuis sa position neutre en direction de la position normale maximale et que la première vitesse maximale prédéterminée a une valeur négative dont la valeur absolue augmente avec les variations du signal d'actionnement afin de déplacer l'élément faisant varier le volume de la cylindrée depuis sa position neutre en direction de la position inverse maximale.

11. Système de commande selon la revendication 8, caractérisé par le fait que lesdits moyens de réglage de vitesse maximale (162) comprennent un premier moyen de commutation (180) ayant une première position dans laquelle ladite seconde vitesse maximale prédéterminée ($\alpha_2$) est délivrée en tant que sortie et une seconde position dans laquelle ladite troisième vitesse maximale prédéterminée ($\alpha_3$) est délivrée en tant que sortie, et un second moyen de commutation (178) ayant une première position dans laquelle ladite première vitesse maximale prédéterminée ($\alpha_1$) est délivrée en tant que sortie auxdits moyens de commande de pompe (164) et une seconde position dans laquelle la sortie dudit premier moyen de commutations (180) est délivrée en tant que sortie auxdits moyens de commande de la pompe, un premier moyen de manoeuvre de commutateur (172) ayant pour objet d'amener le premier moyen de commutation dans ladite première position lorsque le signal de détecteur ($Y_L$) est négatif et dans ladite seconde position lorsqu'il est positif, et un second moyen de manoeuvre de commutateur (172—176) ayant pour objet d'amener ledit second moyen de commutation dans ladite première position lorsque le signal d'actionnement ($Y_L$) est supérieur au signal de détecteur ($Y_L$) et ce dernier est positif ou quand le signal d'actionnement est plus petit que le signal de détecteur et, ce dernier est négatif, et d'amener ledit second moyen de commutation dans ladite second position lorsque le signal d'actionnement est plus petit que le signal de détecteur et ce dernier est positif ou lorsque le signal d'actionnement est supérieur au signal de détecteur et ce dernier est négatif.

**Patentansprüche**

1. Regelsystem (12, 70, 130, 160) für einen Hydraulikkreis (2, 64), der aufweist eine Hydraulikpumpe (4, 60) mit veränderbarer Förderleistung und ein von der Pumpe betriebenes Stellglied (6) dessen Arbeitsgeschwindigkeit von der Stellung eines das Fördervolumen veränderlichen Glieds (8, 66) der Pumpe gesteuert wird; wobei das Regelsystem aufweist

ein Bedienglied (14), das ein Bediensignal ($X_L$) erzeugt, das ein Befehlssignal für die Stellung des das Fördervolumen der Pumpe verändernden Glieds und damit für die Arbeitsgeschwindigkeit des Stellglieds abgibt,

einen Fühler (16), der eine Ist-Stellung des das Fördervolumen verändernden Glieds erfaßt und eine Signal ($Y_L$) erzeugt, das die Ist-Stellung angibt,

eine Höchstgeschwindigkeits-Einstelleinrichtung (20, 72, 132, 162, 200) die eine erste vorbestimmte Höchstgeschwindigkeit ($\alpha_1$) für die Betriebsgeschwindigkeit des das Fördervolumen verändernden Glieds voreinstellt und

eine Pumpensteuereinrichtung (20, 74, 164), die das das Fördervolumen verändernde Glied anhängig von dem Bediensignal und dem Fühlersignal steuert, während sie die Betriebsgeschwindigkeit des das Fördervolumen verändernden Glieds auf einen Wert unterhalb der vorgegebenen Höchstgeschwindigkeit begrenzt,

dadurch gekennzeichnet, daß die Höchstgeschwindigkeits-Einstelleinrichtung (20, 72, 132, 162, 200) außerdem einer zweite vorgegebene Höckstgeschwindigkeit ($\alpha_2$, $\alpha_3$) für die Betriebsgeschwindigkeit des das Fördervolumen verändernden Glieds (8, 66) voreinstellt, die höher ist als die erste vorgegebene Höchstgeschwindigkeit ($\alpha_1$) und die erste vorgegebene Höchstgeschwindigkeit wählt, wenn die vom Bediensignal ($X_L$) befohlene Arbeitsrichtung des Stellglieds (6) dieselbe ist wie dessen tatsächliche Arbeitsrichtung und die zweite vorgegebene Höchstgeschwindigkeit wählt, wenn die vom Bediensignal befohlene Stellung des das Fördervolumen verändernden Glieds die Ruhestellung ist oder wenn die vom Bediensignal befohlene Arbeitsrichtung des Stellglieds der tatsächlichen Arbeitsrichtung entgegengesetzt ist, wodurch

die Pumpensteuereinrichtung (22, 74, 164) die Geschwindigkeit des das Fördervolumen verändernden Glieds auf der Basis der von der Höchstgeschwindigkeits-Einstelleinrichtung gewählten ersten oder zweiten vorgegebenen Höchstgeschwindigkeit steuert.

2. Regelsystem nach Anspruch 1, dadurch gekennzeichnet, daß die Höchstgeschwindigkeits-Einstelleinrichtung (20, 72) eine erste Vorrichtung (24), die die erste Höchstgeschwindigkeit ($\alpha_1$), vorgibt und eine zweite Vorrichtung (26) aufweist, die die zweite Höchstgeschwiindigkeit ($\alpha_1$) vorgibt, wobei die erste und die zweite vorgegebene Höchstgeschwindigkeit jeweils einen konstanten Wert haben.

3. Regelsystem nach Anspruch 2, dadurch gekennzeichnet, daß die Höchstgeschwindigkeits-Einstelleinrichtung (20) einen Schalter (28), der in einer ersten Stellung die erste vorgegebene Höchstgeschwindigkeit ($\alpha_1$) und in einer zweiten Stellung die zweite vorgegebene Höchstgeschwindigkeit ($\alpha_2$) als einen Ausgang an die Pumpensteuereinrichtung abgibt und eine Schalterstellvorrichtung (30—38) aufweist, die den Schalter (28) in der erste Stellung bringt, wenn sowohl das Bediensignal $(X_L)$ als auch das Fühlersignal $(Y_L)$ positiv oder negativ sind und den Schalter in die zweite Stellung bringt, wenn das Bediensignal und das Fühlersignal unterschiedliche Vorzeichen haben oder wenn der Wert des Bediensignals nahe Null ist.

4. Regelsystem nach Anspruch 2, dadurch gekennzeichnet, daß der Hydraulikkries (64) außerdem ein Richtungssteuerventil (62) aufweist, das das Stellglied (6) in Normal- bzw. Kehrrichtung arbeiten läßt, wenn ein von Ventil empfangenes Steuersignal $(Z_2)$ "1" bzw. "0" ist, und die Höchstgeschwindigkeits-Einrichtung (72) einen Schalter (28), der in einer ersten Stellung die erste vorgegebnen Höchstgeschwindigkeit $(\alpha_1)$ und in einer zweiten Stellung die zweite vorgegebene Höchstgeschwindigkeit $(\alpha_2)$ der Pumpensteuereinrichtung liefert und eine Schalterstellvorrichtung (32—38) aufweist, die den Schalter in die erste Stellung bringt, wenn das Bediensignal $(X_L)$ positiv und das Ventilsteuersignal $(Z_2)$ "1" ist oder wenn das Bediensignal negativ und das Ventilsteuersignal "0" ist und den Schalter in die zweite Stellung bringt, wenn das Bediensignal positiv und das Ventilsteuersignal "0" wenn das Bediensignal negativ und das Ventilsteuersignal "1" oder wenn der Wert des Bediensignals nahe Null ist.

5. Regelsystem nach Anspruch 1, dadurch gekennzeichnet, daß die Höchstgeschwindigkeits-Einstelleinrichtung (132) eine erste Vorrichtung (134), die die erste Höchstgeschwindigkeit $(\alpha_1)$ vorgibt und eine zweite Vorrichtung (26) aufweist, die die zweite Höchstgeschwindigkeit $(\alpha_2)$ vorgibt, wobei die erse vorgegebene Höchstgeschwindigkeit eine solche funktionale Beziehung zum Bediensignal $(X_L)$ hat, daß ihr Wert wächst, wenn der Absolutwert des Bediensignals ansteigt.

6. Regelsystem nach Anspruch 5, dadurch gekennzeichnet, daß die Höchstgeschwindigkeits-Einstelleinrichtung (132) einen Schalter (28), der in einer ersten Stellung die erste vorgegebene Höchstgeschwindigkeit $(\alpha_1)$ und in einer zweiten Stellung die zweite vorgegebene Höchstgeschwindigkeit $(\alpha_2)$ der Pumpensteuereinrichtung liefert, und eine Schalterstellvorrichtung (30—38) aufweist, die den Schalter in die erste Stellung bringt, wenn sowohl das Bediensignal $(X_L)$ als auch das Fühlersignal $(Y_L)$ positiv oder negativ sind und den Schalter in die zweite Stellung bringt, wenn das Bediensignal und das Fühlersignal unterschiedliche Vorzeichen haben oder wenn der Wert des Bediensignals nahe Null ist.

7. Regelsystem nach Anspruch 1, dadurch gekennzeichnet, daß die Höchstgeschwindigkeits-Einstelleinrichtung (162, 200) eine erste Vorrichtung (166) die die erste Höchstgeschwindigkeit $(\alpha_1)$ vorgibt und eine eine zweite Vorrichtung (168, 170) aufweist, die die zweite Höchstgeschwindigkeit $(\alpha_2, \alpha_3)$ vorgibt, wobei die zweite vorgegebene Höchstgeschwindigkeit $(\alpha_2, \alpha_3)$ mit dem Bediensignal $(X_L)$ so in funktionaler Beziehung steht, daß der Absolutwert der zweiten vorgegebenen Höchstgeschwindigkeit wächst, wenn sich das Bediensignal ändert, um das das Fördervolumen verändernde Glied (8) von seiner Normalstellung und seiner maximalen Gegenstellung zu seiner neutralen Stellung hin zu bewegen und bei sich änderndem Bediensignal weiter anwächst, um das das Fördervolumen verändernde Glied (8) von der Nähe seiner neutralen Stellung in die Richtung der anderen Maximalstellung zu bewegen.

8. Regelsystem nach Anspruch 1, dadurch gekennzeichnet, daß die Höchstgeschwindigkeits-Einstelleinrichtung (162) eine erste Vorrichtung (166), die die erste Höchstgeschwindigkeit $(\alpha_1)$ vorgibt und eine zweite und eine dritte Vorrichtung (168, 170) aufweist, die die zweite Höchstgeschwindigkeit $(\alpha_2, \alpha_3)$ vorgeben, wobei die von der zweiten Vorrichtung (168) vorgegebene Höchstgeschwindigkeit $(\alpha_2)$ einen positiven Wert hat und vom Bediensignal funktional so abhängt, daß ihr Wert bei sich änderndem Bediensignal wächst, um das das Fördervolumen verändernde Glied (8) aus seiner maximalen Gegenstellung in die Richtung seiner neutralen Stellung zu bewegen und bei sich veränderndem Bediensignal weiter anwächst, um das das Fördervolumen verändernde Glied aus der annähernd neutralen Stellung in Richtung zu seiner normalen Maximalstellung zu bewegen und wobei die von der dritten Vorrichtung (170) vorgegebene Höchstgeschwindigkeit $(\alpha_3)$ einen negativen Wert hat und vom Bediensignal so funktional abhängt, daß ihr Absolutwert bei sich veränderndem Bediensignal wächst, um das das Fördervolumen verändernde Glied von seiner normalen Maximalstellung in Richtung zu seiner neutralen Stellung zu bewegen und bei sich veränderndem Bediensignal weiter anwächst, um das das Fördervolumen verändernde Glied aus der Nähe seiner neutralen Stellung in Richtung zur maximalen Gegenstellung zu bewegen.

9. Regelsystem nach Anspruch 7 oder 8, dadurch gekennzeichnet, daß die erste vorgegebene Höchstgeschwindigkeit $(\alpha_1)$ funktional vom Bediensignal $(X_L)$ so abhängt, daß ihr Absolutwert wächst, wenn sich das Bediensignal ändert, um das das Fördervolumen verändernde Glied (18) von seiner neutralen Stellung weg zu bewegen.

10. Regelsystem nach Anspruch 7 oder 8, dadurch gekennzeichnet, daß die erste vorgegebene Maximalgeschwindigkeit $(\alpha_1)$ von dem Bediensignal $(X_L)$ so funktional abhängt, daß die erste vorgegebene Höchstgeschwindigkeit einen positiven Wert hat, der mit sich veränderndem Bediensignal wächst, um das das Fördervolumen verändernde Glied von seiner neutralen Stellung in die Richtung seiner normalen Maximalstellung zu bewegen und daß die erste vorgegebene Maximalgeschwindigkeit einen negativen Wert hat, der bei sich veränderndem Bediensignal wächst, um das das Födervolumen verändernde Glied aus seiner neutralen Stellung in Richtung seiner maximalen Gegenstellung zu bewegen.

11. Regelsystem nach Anspruch 8, dadurch gekennzeichnet, daß die Höchstschwindigkeits-Einstelleinrichtung (162) aufweist einen ersten Schalter (180), der eine erste Stellung in der die zweite vorgegebene Höchstgeschwindigkeit ($a_2$) als ein Ausgang abgegeben wird und eine zweite Stellung hat, in der die dritte vorgegebene Höchstgeschwindigkeit ($a_3$) als ein Ausgang abgegeben wird sowie einen zweiten Schalter (178), der in einer ersten Stellung die erste vorgegebene Höchstgeschwindigkeit ($a_1$) un in einer zweiten Stellung den Ausgang des ersten Schalters (180) als Ausgang der Pumpensteuer-einrichtung zuführt, eine erste Schalterstell-vorrichtung (172), die den ersten Schalter in die erste Stellung bringt, wenn das Fühlersignal ($Y_L$) negativ ist und in die zweite Stellung bringt, wenn das Fühlersignal positiv ist, und eine zweite Schalterstellvorrichtung (172—176), die den zweiten Schalter in der erste Stellung bringt, wenn das Bediensignal ($X_L$) größer als das Fühlersignal ($Y_L$) und wenn letzteres positiv ist oder wenn das Bediensignal kleiner als das Fühlersignal und letzteres negativ ist und den zweiten Schalter in die zweite Stellung bringt, wenn das Bediensignal kleiner als das Fühlersignal und das letztere positiv ist oder wenn das Bediensignal größer als das Fühlersignal und das letztere negativ ist.

F I G. 1

0 061 759

FIG. 2

0 061 759

F I G. 3

F I G. 4

F I G. 5

$\alpha_I$ max

$\alpha_I$ min

$-X$max

O

$X_{LI}$

($1/4 X_L$max)

$X_L$max

$X_L$

$\alpha_I$

F I G. 6a

$X_L$max

OPERATING SIGNAL $X_L$

O

F I G. 6b

$Y_L$max

SWASH PLATE POSITION SIGNAL $Y_L$

O

F I G. 7a

OPERATING SIGNAL $X_L$

$X_{LI}$

O

F I G. 7b

SWASH PLATE POSITION SIGNAL $Y_L$

1/4

O

# F I G. 8

## FIG. 9

ROM 146    ROM 148    RAM 150

MULTIPLEXOR 142

A/D CONVERTER 144

CPU 152

D/A CONVERTER 154

X 14

Y 16

Z

10

140

0 061 759

F I G. 10

*Flowchart:*

START
↓ (a-1)
READ OPERATING SIGNAL $X_L$ FROM A/D
↓
(a-2) READ SWASH PLATE POSITION SIGNAL $Y_L$ FROM A/D
↓
(a-3) $Y_L \geqq 0$ ?
- YES → (a-4) $X_L > 0$ ?
  - YES → (a-5) READ $\alpha_1$ CORRESPODING TO $X_L$ FROM ROM TABLE AND RENDER SAME $\alpha$
  - NO → (crossover)
- NO → (a-6) $X_L \leqq 0$ ?
  - YES → (crossover)
  - NO → (a-7) RENDER $\alpha$ $\alpha_2$

↓
(a-8) $X_L = Y_L$ ?
- NO → (a-9) CALCULATE $\dot{X}_L$ FROM $(X_L - Y_L)$ AND CYCLE TIME tc
  ↓
  (a-10) $|\dot{X}_L| \leqq \alpha$ ?
  - NO → (a-11) PROVIDE FROM D/A A SIGNAL FOR MOVING $Y_L$ AT A SPEED $\alpha$
  - YES → (a-12) PROVIDE FROM D/A A SIGNAL FOR MOVING $Y_L$ AT A SPEED $\dot{X}_L$
- YES → (a-13) PROVIDE FROM D/A A SIGNAL FOR STOPPING $Y_L$

↓
(a-14) TO START

8

F I G. 11

FIG. 12

FIG. 13

10

0 061 759

FIG. 14

$X_L$ → [box with $-X_L max$, $X_{La}$ $0$, $X_{Lb}$ $X_L$, $X_{Lo}X_{Lmax}$; $\alpha_{31}$, $\alpha_{32}$, $\alpha_{33}$] → $\alpha_3$

FIG. 15

11

# FIG. 16

# F I G. 17

FIG. 18

# 0 061 759

FIG. 19

START

a-1 READ OPERATING SIGNAL $X_L$ FROM A/D AND TEMPORAILY STORE SAME IN RAM

a-2 READ SWASH PLATE POSITION SIGNAL $Y_L$ FROM A/D AND TEMPORARILY STORE SAME IN RAM

a-3 $Y_L \geqq 0$?
  - YES
  - NO

a-4 $X_L \geqq Y_L$?
  - YES
  - NO

a-5 $X_L < Y_L$?
  - YES
  - NO

a-6 READ $\alpha_3$ CORRESPONDING TO $X_L$ FROM ROM TABLE (iii) AND RENDER SAME $\alpha$

a-7 READ $\alpha_1$ CORRESPONDING TO $X_L$ FROM ROM TABLE (i) AND RENDER SAME $\alpha$

a-8 READ $\alpha_2$ CORRESPONDING TO $X_L$ FROM ROM TABLE (ii) AND RENDER SAME $\alpha$

a-9 CORRECT $X_L$ REGARDING DEAD ZONE INTO FRESH $X_L$

a-10 $X_L = Y_L$?
  - NO
  - YES

a-11 CALCULATE $\dot{X}_L$ FROM $(X_L - Y_L)$ AND CYCLE TIME $t_c$

a-12 $|\dot{X}_L| \leqq |\alpha|$?
  - YES
  - NO

a-13 PROVIDE FROM D/A A SIGNAL FOR MOVING $Y_L$ AT A SPEED $\alpha$

a-14 PROVIDE FROM D/A A SIGNAL FOR MOVING $Y_L$ AT A SPEED $\dot{X}_L$

a-15 PROVIDE FROM D/A A SIGNAL FOR STOPPING $Y_L$

a-16 TO START

15